# EUROPEAN PATENT APPLICATION

(11) **EP 4 797 018 A1**
(43) Date of publication of application: **26.08.2026**
(21) Application number: 25159395.0
(22) Date of filing: 21.02.2025
(51) Int. Cl.: G05B 19/418, G05B 23/02, G05B 13/02

(54) **METHOD AND SYSTEM FOR OPTIMIZING PROCESS PARAMETERS IN A CEMENT KILN**

(71) Applicant: Innomotics GmbH, 90441 Nürnberg (DE)
(72) Inventor: SCHOONE, Sunny, 91052 Erlangen (DE); SZABO, László, 1022 Budapest (HU); A, Balakrishnan, 560021 Bangalore, Karnataka (IN)
(74) Representative: Michalski Hüttermann & Partner mbB

(57) **Abstract**

Present invention relates to a method for optimizing real-time process parameters in a cement kiln (102). The method includes determining the occurrence of an anomalous event by analyzing a plurality of real-time process parameters captured by sensors (104) associated with the cement kiln. The method involves determining at least one signature process pattern associated with at least one historical event, where the at least one signature process pattern comprises a sequence of parameter changes occurring in a first time period prior to the historical event, which is similar to the anomalous event. Based on the at least one signature process pattern, a sequence of optimized actions is generated using an optimizing algorithm applied to past user actions taken in response to the historical event. The sequence of optimized actions is then deployed to neutralize the anomalous event, thereby optimizing the real-time process parameters in the cement kiln (102). The method enhances efficiency and stability of cement kiln operations by leveraging advanced data analytics and machine learning for real-time optimization.

## Description

The present invention relates to a technical field of cement manufacturing, specifically to methods and systems for optimizing process parameters in cement kilns.

Cement manufacturing process, particularly operation of cement kilns, is one of the most energy-intensive and complex industrial processes. A pyro process in a cement kiln involves a series of thermodynamic reactions that must be meticulously controlled to produce high-quality clinker. However, achieving and maintaining optimal operating conditions in a cement kiln is fraught with challenges due to various factors such as the variability of input raw materials, fluctuating fuel types and qualities, and dynamic firing conditions including temperature and burning time.

Inherent complexity of the pyro process makes it difficult to maintain stable operating conditions. Any deviation from the optimal process parameters can lead to the production of off-spec clinker, operational inefficiencies, and even unplanned shutdowns. Interdependencies between process parameters mean that a change in one parameter can have cascading effects on others, further complicating control efforts.

Current practice heavily relies on the expertise and experience of senior operators to manage the cement kiln. However, different operators may take varying amounts of time to recognize and respond to disturbances, leading to inconsistent results. In some cases, a delay (ranging from a few minutes to hours) in taking corrective actions can exacerbate the disturbances, leading to prolonged instability and increased production losses.

Existing optimization methods, such as those based on fuzzy logic or Bayesian optimization, often fall short during unstable conditions. Thus, optimization methods typically set control parameters based on the current situation without accounting for the complex physical and chemical interactions within the cement kiln. As a result, existing optimization methods can inadvertently contribute to further instability rather than resolving it.

Although experienced operators possess valuable knowledge about handling various process conditions, the knowledge is seldom digitized or systematically stored. Consequently, insights gained from past experiences are not effectively utilized to inform future operations. Additionally, changes made by operators in control parameters are not adequately analyzed or managed, leading to missed opportunities for process optimization.

The cement industry is under constant pressure to reduce energy consumption and minimize CO2 emissions. However, lack of effective optimization strategies during disturbance modes hampers efforts to achieve goals of reductions in energy consumption. Inconsistent process control can lead to suboptimal fuel usage and increased emissions, further impacting an overall sustainability of cement manufacturing operations.

Furthermore, in the cement manufacturing industry, role of operators is crucial for maintaining stable kiln operations; however, their actions can sometimes inadvertently exacerbate disturbances. Operators often take varying amounts of time to recognize and respond to disturbances due to differences in expertise and experience. This delay in action can lead to prolonged instability within the kiln. Furthermore, when operators do respond, their actions can sometimes lead to additional issues. For instance, operator interventions often result in more spikes in critical parameters such as calciner temperature and sintering zone temperature. This is particularly problematic as these parameters need to be meticulously controlled to ensure high-quality clinker production. Additionally, operators frequently attempt to stabilize the kiln by making multiple parameter changes simultaneously, which can lead to confusion and complicates back-tracing the effects of each individual adjustment. This lack of systematic approach not only increases the difficulty in identifying the root cause of the disturbance but also makes it challenging to develop a coherent strategy for future optimizations. These challenges underscore the need for a more automated and data-driven approach to kiln operation, one that can provide consistent, real-time responses to disturbances and reduce reliance on individual operator expertise.

In light of above, there exists a need for an efficient method and system for optimizing process parameters in a cement kiln.

Thus it is an object of the present invention to provide a method and system for optimizing process parameters in a cement kiln.

The aforementioned object is achieved according to a method as claimed in claim 1 or according to a system as claimed in claim 10. Embodiments result, for example, as claimed in claims 2 to 9 and claims 11 to 13. For example, the object of the present invention is achieved through a method of optimizing process parameters in a cement kiln. The cement kiln is a crucial component in a cement manufacturing process. The cement kiln is responsible for a pyroprocessing stage where raw materials are heated to high temperatures to produce clinker.

The method is implemented in an automation module, which contains software code executable by a processing unit. The automation module may be seated in an edge device, in an industrial control system, or hosted in the cloud. In one example, the automation module, embedded with software code, can be integrated into the edge device situated close to the cement kiln. By positioning the automation module at the edge, there are benefits of reduced latency, allowing real-time monitoring and immediate response to disturbances in an operation of the cement kiln. For instance, if a satellite burner of the cement kiln stops functioning, the automation module swiftly identifies a disturbance and initiates corrective actions based on historical data. Thus, rapid response minimizes downtime and stabilizes the pyroprocessing stage quickly, ensuring consistent clinker quality.

Alternatively, the automation module may be embedded within an industrial control system. The industrial control system continuously oversees an operation of the cement kiln, adjusting parameters like fuel mixture and feed rate in real-time. By leveraging historical data and self-learning algorithms, the industrial control system can make informed decisions that optimize fuel consumption and reduce CO2 emissions. For example, during periods of fluctuating alternative fuel availability, the industrial control system adjusts the coal feed rate precisely, maintaining the necessary heat levels without causing instability in an operation of the cement kiln.

In another example, the automation module is hosted in the cloud. Such a setup offers another layer of advantages. Cloud hosting provides scalable computing resources and extensive data storage capabilities. For example, a cloud-based system can analyze vast amounts of historical process data to identify a sequence of optimized actions for various disturbance scenarios. Information is then relayed back to an industrial control system of the cement kiln, ensuring optimal operation and reducing the need for manual intervention by operators.

The method comprises determining an occurrence of an anomalous event in the cement kiln by analysis of a plurality of real-time process parameters in the cement kiln. The plurality of real-time process parameters may be captured by one or more sensors which are placed within the cement kiln. The anomalous event in a context of a cement kiln refers to any deviation from an optimal operating condition within the cement kiln. Such anomalous events include fluctuations in temperature, pressure, or chemical composition.

The optimal operating condition refers to a state where the cement kiln operates at peak efficiency, maintaining consistent temperatures, pressures, and chemical compositions that ensure high-quality clinker production. In one example, the optimal operating condition is defined by a set of user set values for a plurality of process parameters values for the cement kiln. For example, the optimal operating condition may be defined as an operating condition in which a sintering temperature of the cement kiln is between a user defined temperature range, a pressure is within a user defined range, and a chemical compositions of material within the cement kiln is identical to a user-defined chemical composition.

Remaining in the optimal operating condition is crucial because it directly impacts an energy efficiency, production rates, and overall quality of cement produced. Fluctuations from the optimum operating condition can lead to increased fuel consumption, potential damage to the cement kiln, and inconsistent product quality. Maintaining the optimal operating condition minimizes a risk of equipment shutdowns, reduces production costs, and ensures compliance with environmental regulations by controlling emissions. Thus, importance of remaining in the optimal operating condition cannot be overstated, as it ensures a stability, efficiency, and profitability of the cement manufacturing process. Thus, occurrence of the anomalous event can disrupt a cement manufacturing process.

Determination of the occurrence of the anomalous event involves continuous monitoring and analysis of a plurality of process parameters in the cement kiln. The plurality of process parameters include variables like temperature, pressure, and chemical compositions such as alite and free lime levels. The plurality of process parameters are captured using a network of sensors strategically placed throughout the cement kiln. For example, temperature sensors measure heat in different zones of the cement kiln, while gas analyzers check the composition of gases emitted during a cement manufacturing process.

Occurrence of the anomalous event can potentially cause significant harm in the cement kiln. The anomalous event can lead to production of off-spec clinker, which negatively impacts quality of a final cement product. Moreover, the anomalous event can cause operational inefficiencies, resulting in higher energy consumption and increased emissions of CO2. In severe cases, the anomalous events can lead to unplanned shutdowns, causing substantial production losses and requiring costly interventions to restore normal operations.

The plurality of real-time process parameters are analyzed using one or more advanced data analytics techniques and one or more machine learning algorithms. The one or more advanced data analytics techniques, includes time-series analysis, which are employed to understand historical trends and patterns in the plurality of process parameters. Time-series analysis helps in identifying recurring patterns and anomalous events, thereby facilitating early detection of potential anomalies.

The one or more machine learning algorithms, includes supervised learning algorithms, unsupervised learning algorithms, and reinforcement learning algorithms. The supervised learning algorithms, such as decision trees and support vector machines, are trained on historical data to predict the likelihood of an anomalous event based on current process conditions. The supervised learning algorithms use labeled data to learn a relationship between the plurality of process parameters and the occurrence of the anomalous event.

The unsupervised learning algorithms, such as clustering and principal component analysis, are employed to identify hidden patterns and correlations in the plurality of process parameters without prior labeling. Clustering algorithms, like K-means, group similar data points together, allowing identification of unusual patterns that may signify an impending anomaly. Principal component analysis reduces dimensionality of data, making it easier to visualize and understand complex relationships between the plurality of process parameters.

Deep learning techniques, such as convolutional neural networks and recurrent neural networks, are also applicable. Convolutional neural networks can analyze spatial data from sensor networks, while recurrent neural networks are particularly effective in handling sequential data, capturing temporal dependencies in the process parameters.

The method further comprises analyzing historical data to determine a plurality of historical events which have occurred in the past. The historical data comprises a plurality of past process parameters and a plurality of control parameters. The plurality of process parameters includes variables like temperature, pressure, alite content, and free lime levels. The plurality of process parameters are critical for maintaining optimal kiln operation. The plurality of control parameters consists of settings that one or more operators can adjust to influence the plurality of process parameters, such as fuel feed rate, kiln rotation speed, and air flow rates.

The plurality of historical events are specific occurrences in the past where the cement kiln experienced deviations from normal operating conditions, leading to anomalies or disturbances. Examples of the plurality of historical events include instances where the cement kiln experienced a sudden spike in temperature, leading to overheating, or cases where a fuel mix was altered, causing fluctuations in combustion efficiency. The method further comprises determining, based on the analysis, a plurality of signature process patterns associated with each of the plurality of historical events. The plurality of signature process patterns associated with historical events are distinctive sequences of changes in the plurality of process parameters that precede and characterize the plurality of historical events.

The plurality of signature process patterns are determined by evaluating a plurality of sequences of parameter changes that occurred prior to each historical event of the plurality of historical events. The plurality of sequences of parameter changes refer to variations in values of the plurality of process parameters and the plurality of control parameters of the cement kiln, prior to each of the plurality of historical events. For example, an increase in the sintering zone temperature or a sudden drop in calciner temperature are parameter changes.

The plurality of sequences of parameter changes occur as operators or automated systems adjust the plurality of control parameters in response to real-time process conditions. For example, an operator may increase the fuel feed rate to raise the cement kiln temperature, or decrease the air flow rate to control combustion efficiency.

Advantageously, by determining the plurality of historical events, more effective strategies for future anomaly detection and mitigation may be developed. Historical analysis helps in predicting potential disturbances and optimizing a response of the cement kiln to similar future events.

For example, a first signature process pattern of the plurality of signature process patterns may include a sequence where a gradual increase in kiln temperature is followed by a sharp rise in pressure and a subsequent drop in the alite content of the clinker. Thus, the signature process pattern indicates a progression towards overheating, which can lead to clinker quality degradation if not addressed promptly. In another example, a second signature process pattern involves a scenario where a sudden change in fuel type results in fluctuating temperatures and inconsistent burning times, ultimately causing a decline in combustion efficiency. The second signature process pattern may start with a minor temperature fluctuation, followed by irregular pressure changes and a corresponding shift in the chemical composition of the clinker.

Additionally, a third signature process pattern might include a situation where an unexpected drop in calciner temperature is accompanied by an increase in the cement kiln rotation speed and a subsequent alteration in the fuel feed rate. The third signature process pattern can signify an impending instability in a calcination process, which might lead to incomplete clinker formation. In a fourth signature process pattern, a temporary malfunction of the satellite burner leads to a series of adjustments in air flow and fuel mixture, resulting in a temporary deviation from optimal operating conditions. Thus, the fourth signature process pattern would typically involve an initial drop in temperature, followed by compensatory increases in air flow and adjustments in fuel feed rates to restore stability.

The plurality of signature process patterns are identified by comparing the plurality of process parameters and the plurality of control parameters. In one example, the method comprises analyzing the plurality of sequences of parameter changes that occurred prior to each of the plurality of historical events, thereby identifying the plurality of signature process patterns patterns that consistently led to one or more of the plurality of historical events. By recognizing the plurality of signature process patterns, optimized actions may be generated to neutralize current anomalies, ensuring the cement kiln operates efficiently and consistently.

In one example, the plurality of signature process patterns is determined by the automation module by application of an artificial intelligence algorithm, such as a convolutional neural network (CNN) or a recurrent neural network (RNN). The convolutional neural network can analyze spatial data from sensor networks to identify patterns in how temperature, pressure, and chemical compositions change over different zones of the cement kiln. For example, the convolutional neural network can detect how a gradual temperature increase in the sintering zone correlates with pressure spikes and changes in alite content, forming a signature process pattern for overheating.

The recurrent neural network is particularly effective in handling sequential data and capturing temporal dependencies in the process parameters. For example, the recurrent neural network can model how a sudden change in fuel type affects temperature fluctuations and burning times over a sequence of time steps, leading to a signature process pattern indicative of declining combustion efficiency.

An advantage of using convolutional neural networks and recurrent neural networks lies in their ability to learn complex, non-linear relationships between process parameters. For instance, the convolutional neural network can capture intricate spatial patterns that might be missed by simpler algorithms, while the recurrent neural network can model long-term dependencies that are crucial for understanding the dynamics of the cement kiln. By employing these advanced machine learning techniques, the method can generate more accurate and reliable signature process patterns, ultimately leading to more effective anomaly detection and mitigation.

The method further comprises comparing one or more patterns in the plurality of real-time process parameters associated with the anomalous event to each signature process pattern of the plurality of signature process patterns. The comparison is executed to determine a similar pattern. The comparison is executed by analyzing the collected plurality of real-time process parameters, such as temperatures, pressures, and chemical compositions, against the plurality of signature process patterns.

In one example, one or more machine learning algorithms are used to determine the one or more patterns in the plurality of real-time process parameters and then compare the one or more patterns against the plurality of signature process patterns. The one or more machine learning model calculates a degree of similarity between the one or more patterns the plurality of real-time process parameters and each signature process pattern of the plurality of signature process patterns. The degree of similarity is determined by examining a sequence and a magnitude of parameter changes in the plurality of real-time process parameters and the historical data.

The method further comprises determining a similar pattern from the plurality of signature process patterns. The similar pattern is defined as a signature process pattern that is similar to the one or more patterns in the plurality of real-time process parameters. The degree of similarity may be measured in terms of trends, values, and timing. For example, if a real-time process parameter indicates a sudden drop in calciner temperature followed by a rise in sintering zone temperature, the automation module is configured to determine historical events where a similar sequence occurred. The machine learning algorithm measures the similarity by calculating metrics such as correlation coefficients or Euclidean distances between real-time data points and historical data points.

Advantageously, the automation module increased accuracy in predicting a best course of action which can be taken as a response to occurrence of the anomalous event, by leveraging extensive historical data to inform decision-making. By identifying a similar pattern, the automation module ensures that optimized actions are recommended based on proven successful responses from the past, thereby reducing a time required to stabilize the cement kiln. Use of the one or more machine learning algorithms ensures that predictive capabilities are continuously improved, leading to more efficient and consistent kiln operations.

The method further comprises selecting at least one signature process pattern from the plurality of signature process patterns. The at least one signature process pattern is selected based on the comparison. The selected signature process pattern is used as a basis for generating a sequence of optimized actions recommended to be performed to neutralize the anomalous event. Selecting the at least one signature process pattern involves identifying a historical sequence of parameter changes that most closely matches the plurality of real-time process parameters associated with occurrence of the anomalous event. In one example, the at least one signature process pattern is similar to the one or more patterns in the plurality of real-time process parameters.

In one example, the at least one signature process pattern is selected by ranking the plurality of signature process patterns on a calculated set of degree of similarities with the plurality of real-time process parameters. The at least one signature process pattern, of the plurality of signature process patterns, with a highest similarity score is chosen as a most relevant signature process pattern that mirrors the current anomalous event. The at least one signature process pattern is associated with at least one historical event. The at least one historical event is a past anomalous event which most closely mirrors the determined anomalous event. Thus, the selected at least one signature process pattern serves as a template for generating the sequence of optimized actions. The selected at least one signature process pattern provides a proven sequence of parameter adjustments that successfully stabilized the cement kiln in a similar past situation.

Advantageously, selection of the at least one signature process patterns increases precision in addressing anomalous events and reduces a response time. The automation module ensures that the generated sequence of optimized actions are more likely to succeed in restoring stability of the cement kiln, upon implementation. Thus, trial-and-error interventions by operators are minimized, leading to more consistent and efficient kiln operations. Furthermore, use of a well-documented historical pattern ensures that the corrective actions are based on empirical evidence, thereby enhancing the reliability and effectiveness of the optimization process. The automation module ultimately contributes to improved fuel efficiency, reduced emissions, and minimized production losses by providing targeted and data-driven optimization recommendations.

In one example, the selected at least one signature process pattern comprises a sequence of parameter changes which has occurred in a first time period prior to an occurrence of the at least one historical event in the past. It is noted that the at least one historical event is similar to the anomalous event. The sequence of parameter changes comprises changes in a plurality of process parameters in the first time period. The sequence of parameter changes further comprises specific adjustments made by a user, to a plurality of control parameters within the cement kiln, such as fuel feed rates, kiln rotation speeds, and temperature setpoints, in the first time period leading up to the occurrence of the at least one historical event in the past. The specific adjustments are recorded over a defined duration, known as the first time period, which leads up to the occurrence of the at least one historical event.

In one example, the first time period is a predefined duration during which the sequence of parameter changes is monitored and analyzed. For instance, if the first time period is T-30, this indicates a duration of 30 minutes before the occurrence of the at least one historical event. In this context, T-30 means that the sequence of parameter changes that took place in the 30 minutes leading up to the at least one historical event is analyzed to determine the sequence of optimized actions.

Consider an example where the anomalous event involves a sudden drop in calciner temperature within the cement kiln. The at least one historical event, which is similar to the anomalous event, might also have exhibited a similar drop in calciner temperature. During the first time period of T-30, the automation module is configured to analyze the sequence of parameter changes, such as adjustments to a fuel feed rate and kiln rotation speed, that were implemented to address a drop in temperature during the at least one historical event. Analysis of the sequence of parameter changes provides insights into effective corrective actions that can be applied to mitigate the current anomalous event.

By examining the sequence of parameter changes that occurred before the at least one historical event, the automation module is configured to determine which specific adjustments were successful in restoring stability to operations of the cement kiln. Thus, a consistency and reliability of kiln operations is improved, leading to improved process efficiency, reduced fuel consumption, and lower emissions. The method ensures that each anomalous event is addressed with optimized actions tailored to specific conditions of the cement kiln, based on proven effectiveness of historical corrective actions.

The method further comprises correlating each parameter change in the sequence of parameter changes, of the at least one signature process pattern, to a plurality of sequences of user actions performed by a user in the past. The plurality of sequences of user actions are performed by the user in response to the at least one historical event.

The automation module utilizes advanced machine learning algorithms, such as neural networks or decision trees, to make the correlation. The advanced machine learning algorithms are adept at identifying patterns and relationships within large datasets. For instance, if a historical event involved a sudden drop in calciner temperature, the advanced machine learning algorithms are configured to analyze the sequence of parameter changes that led to this event and how the user adjusted control parameters to rectify the situation. One specific example of the advanced machine learning algorithms are support vector machines (SVMs) configured to classify data points and identify the optimal hyperplane that separates stable from unstable conditions. For example, support vector machines can analyze historical data to determine the threshold values of temperature and pressure that distinguish between normal and anomalous kiln operations. By correlating these threshold values with the plurality of past user actions, support vector machines can provide actionable recommendations for maintaining stable conditions.

In another example, the advanced machine learning algorithms comprises decision trees used to correlate parameter changes with the plurality of past user actions. The decision trees provide an interpretable model of how different parameter changes lead to historical events and how users responded. For instance, a decision tree might reveal that a combination of increasing the coal feed rate and adjusting the air flow consistently led to the stabilization of kiln temperature following a drop in calciner temperature. By providing a clear and understandable model, decision trees help operators comprehend the rationale behind specific correlations and improve decision-making.

A response from the user typically involves one or more user actions such as adjusting fuel feed rates, modifying kiln rotational speed, or altering air flow rates to stabilize the cement kiln's operating conditions. For example, if the calciner temperature drops, the user may increase a coal feed rate to provide additional heat, thereby stabilizing the temperature. The one or more user actions are crucial as they directly influence a performance and stability of the cement kiln.

Advantages of correlating parameter changes with the plurality of past user actions are manifold. For example, the correlation process involves digitizing and analyzing expertise of seasoned operators, thereby ensuring that valuable knowledge is systematically captured and utilized, reducing a dependency on individual expertise. Furthermore, a time required to stabilize the cement kiln is reduced, leading to reduced production losses and enhanced overall efficiency.

The method further comprises applying an optimizing algorithm on the plurality of sequences of user actions and on a set of parameter values. The set of parameter values refers to specific readings and statuses of various process parameters and control parameters in the cement kiln, such as temperature, pressure, fuel feed rate, and air flow rate, in a second time period. The set of parameter values further comprises one or more control parameters received from one or more operators of the cement kiln, after occurrence of the at least one historical event. At least one parameter value of the set of parameter values were captured by the one or more sensors in the second time period. The optimizing algorithm is configured to generate the sequence of optimized actions based on the application of the optimizing algorithm on the plurality of sequences of user actions and on the set of parameter values.

The second time period is a defined duration during which operations of the cement kiln are monitored following the at least one historical event and subsequent user actions. For instance, if the first time period ends at T (the moment the disturbance is addressed), the second time period could extend from T to T+30. T+30 signifies a point in time 30 minutes after the at least one historical event was addressed. During T+30, performance of the cement kiln is closely observed to ensure that implemented actions have effectively stabilized process. For example, the sequence of optimized actions includes increasing the coal feed rate, adjusting an air flow, or modifying a kiln rotation speed to counteract a temperature drop or pressure fluctuation.

In one example, the optimizing algorithm is a genetic algorithm. The genetic algorithm mimics the process of natural selection to generate the sequence of optimized actions that result in stable kiln operations. During the second time period, the genetic algorithm evaluates various combinations of parameter values, such as different fuel feed rates and air flow settings in the set of parameter values. By iteratively selecting, combining, and mutating best-performing parameter sets, the genetic algorithm converges on a most effective adjustments to maintain stability. For example, the genetic algorithm might determine that a specific combination of increasing the coal feed rate by 5% and reducing the air flow by 3% leads to the most stable temperature and pressure conditions in the cement kiln. The genetic algorithm can then recommend these adjustments as part of the sequence of optimized actions.

Another example of the optimizing algorithm is a reinforcement learning algorithm. The reinforcement learning algorithm learns to generate plurality of optimized actions by receiving feedback from the environment-in this case, the cement kiln's operating conditions. During the second time period, the reinforcement learning algorithm continuously monitors the cement kiln's performance and makes incremental adjustments to control parameters, such as modifying the cement kiln rotation speed or altering the fuel mixture. The reinforcement learning algorithm receives rewards or penalties based on the outcomes of these adjustments, such as achieving stable temperature or experiencing pressure fluctuations. Over time, the reinforcement learning algorithm learns the best strategies to optimize kiln operations. For example, the reinforcement learning algorithm might learn that gradually increasing the fuel feed rate while maintaining a steady air flow rate leads to optimal combustion efficiency and clinker quality. The reinforcement learning algorithm can then implement these learned strategies as part of the sequence of optimized actions.

Advantageously, using the genetic algorithm allows for the exploration of a wide range of potential solutions, ensuring that the most effective combination of parameter values is identified. The genetic algorithm's iterative process ensures that the cement kiln operates within optimal parameters, reducing the risk of instability and improving overall efficiency. Similarly, the reinforcement learning algorithm provides the advantage of continuous learning and adaptation, allowing the system to improve its decision-making capabilities over time. By receiving real-time feedback and adjusting its strategies accordingly, the reinforcement learning algorithm ensures that the cement kiln remains stable even in the face of changing conditions. Both algorithms contribute to reduced energy consumption, lower production costs, and enhanced clinker quality by providing precise and timely optimization recommendations.

Advantageously, applying the optimizing algorithm during the second time period is crucial so as to evaluate an effectiveness of the plurality of past user actions taken to rectify the at least one historical event. By analyzing the plurality of process parameters during T+30, the optimizing algorithm is enabled to assess whether the cement kiln has returned to stable conditions and make further recommendations if necessary. For example, if the calciner temperature remains unstable during T+30, the algorithm might suggest additional adjustments to the fuel feed rate or air flow to achieve the desired stability.

Advantageously, applying the optimizing algorithm on the second time period allows for real-time fine-tuning of the operations of the cement kiln, ensuring that any residual instabilities are promptly addressed. By continuously monitoring and adjusting the plurality of process parameters, the automation module enhances the overall efficiency of the cement kiln, leading to reduced energy consumption and lower production costs. Furthermore, a reliance on operator expertise is reduced, making operations of the cement kiln more consistent and reliable. Finally, the systematic application of the optimizing algorithm during T+30 ensures that the cement kiln operates within optimal parameters, thereby improving clinker quality and reducing emissions.

The optimizing algorithm is configured to determine a stability parameter of the set of parameter values, subsequent to the implementation of each sequence of the plurality of sequences of historical user actions. The stability parameter is a quantitative measure that indicates how stable the cement kiln's operation is over a given period. For example, the stability parameter can be represented by metrics such as a standard deviation of temperature readings, a consistency of pressure levels, or a uniformity of fuel feed rates. A low standard deviation in temperature readings would indicate a stable thermal environment within the cement kiln.

An exemplary representation of the stability parameter can be a variance in calciner temperature over the second time period. If the calciner temperature maintains a consistent value with minimal fluctuation, the variance would be low, thereby indicating a high stability parameter. Conversely, large fluctuations would result in a high variance, indicating a low stability parameter.

In one example, the automation module is configured to select an optimal sequence of past user actions from the plurality of sequences of user actions in the historical data. The optimal sequence of past user actions refers to a specific set of actions taken by users in the past that led to a most stable kiln operation in the past. For example, if historical data shows that increasing a coal feed rate followed by adjusting an air flow resulted in a stable temperature, a sequence comprising increasing the coal feed and adjusting the air flow would be considered optimal. The optimizing algorithm selects the optimal sequence of historical user action based on the stability parameter, ensuring that chosen actions have consistently led to stable conditions in the past.

In one example, the sequence of optimized actions are generated based on the selected optimal sequence of past user actions. Once the optimizing algorithm identifies the optimal sequence of past user actions, the optimizing algorithm generates the sequence of optimized actions to be implemented in a current scenario. For instance, if the optimal sequence involved first increasing the coal feed rate and then adjusting the air flow, the optimizing algorithm would generate these actions as recommended steps to achieve stability. By following the sequence of optimized actions, the cement kiln can quickly return to stable operating conditions, minimizing downtime and improving overall efficiency.

Advantageously, determining the stability parameter and selecting the optimal sequence of past user actions ensures that generation of the plurality of optimized actions is grounded in proven, data-driven strategies, thereby enhancing reliability.

In other words, the method further comprises generating, based on the determined at least one signature process pattern, a sequence of optimized actions which are configured to neutralize the anomalous event. The sequence of optimized actions is generated by application of the optimizing algorithm on the set of parameter values associated with the at least one historical event. The set of parameter values comprises information associated with the at least one historic user action was performed by at least one user in the past in response to the occurrence of the at least one historical event.

The real-world benefits of such an approach are significant. Firstly, the method reduces a reliance on operator expertise, making decisions more consistent and less prone to human error. Cement plants often face challenges due to variations in operator skill levels, which can lead to inconsistent responses to similar problems. By digitizing and analyzing historical actions, the automation module ensures that best practices are systematically applied, leading to more uniform and effective process control.

The method further comprises automatically adjusting control parameters in the cement kiln based on the generated sequence of optimized actions. Automatic adjustment is implemented through an industrial control system that interfaces with an existing hardware and software infrastructure of the cement kiln. For example, the industrial control system may include programmable logic controllers (PLCs) and distributed control systems (DCS) that receive instructions from the machine learning algorithm and execute the necessary adjustments in real-time.

The industrial control system comprises several key components such as sensors, actuators, and industrial devices. The industrial control system automatically adjusts a plurality of control parameters by sending commands to the PLCs and DCS. Advantageously, automatically adjusting control parameters minimizes a response time to disturbances, thereby reducing a risk of prolonged instability and potential shutdowns. By automatically implementing proven corrective actions, the industrial control system ensures that the cement kiln operates within optimal parameters, enhancing overall efficiency. The method further comprises providing real-time feedback to the user on the implemented sequence of optimized actions and a plurality of effects of deployment of the sequence of optimized actions.

In a real-world scenario, consider a cement plant where the cement kiln operator is alerted to a sudden fluctuation in the sintering zone temperature. The industrial control system quickly identifies the optimal sequence of past user actions to counter this fluctuation and automatically adjusts the control parameters accordingly, such as modifying the fuel feed rate and adjusting the air flow.

The industrial control system provides real-time feedback to an operator through an interactive user interface. The interactive user interface displays the sequence of optimized actions-such as the increased coal feed rate and adjusted air flow-and immediate effects on operating conditions of the cement kiln. For example, the interface might show a stabilization in the sintering zone temperature, a reduction in pressure fluctuations, and an improvement in clinker quality. By presenting this information in real-time, the operator can monitor the effectiveness of the deployed actions and gain insights into how specific adjustments influence the cement kiln's performance.

In other words, the method further comprises deploying the sequence of optimized actions on the cement kiln to neutralize the anomalous event and thereby optimize the plurality of process parameters in the cement kiln. The advantage of deploying the sequence in this manner lies in the immediacy and precision of the response. The plurality of optimized actions can be deployed immediately, ensuring that any detected anomaly is addressed without delay. For example, if a sudden drop in kiln temperature occurs, the automation module can instantly increase the fuel feed rate and adjust the air flow, thereby stabilizing the temperature before it leads to further complications.

In one example, the sequence of optimized actions are deployed at T+1. T+1 refers to a moment immediately following a detection of an anomaly. By deploying the plurality of optimized actions at T+1, the automation module ensures that corrective measures are implemented as soon as a disturbance is identified. Thus, rapid response minimizes a duration of instability and prevents a anomaly from escalating into a more severe issue.

The environmental advantages of deploying the sequence of optimized actions are significant. By maintaining stable kiln operations, the method ensures that fuel is burned more efficiently, leading to reduced emissions of CO2 and other pollutants. For instance, by optimizing the air-fuel ratio and maintaining consistent temperatures, the cement kiln operates more cleanly, contributing to lower greenhouse gas emissions and a smaller environmental footprint.

The financial advantages of this approach are also substantial. By minimizing downtime and maintaining stable operations, the cement plant can maximize its production output, thereby increasing revenue. Additionally, efficient fuel usage and optimized resource management result in cost savings. For example, by avoiding overuse of expensive fuels and reducing energy waste, the plant can significantly lower its operational expenses.

The return on investment (ROI) related advantages are evident when considering the long-term benefits of deploying the plurality of optimized actions. The initial investment in the machine learning algorithm and automated control system is quickly recouped through increased efficiency, reduced downtime, and lower operational costs. As the system continuously learns and improves, the ROI continues to grow, making the investment highly worthwhile.

Wear and tear based advantages are also notable. By maintaining optimal operating conditions, the method reduces the stress on kiln components, thereby extending their lifespan. For example, consistent temperature control prevents thermal cycling, which can cause damage to refractory materials and other critical components. This leads to lower maintenance costs and less frequent replacements, further enhancing the plant's profitability.

The CO2 reduction advantages are particularly important in the context of global efforts to combat climate change. By optimizing fuel usage and improving combustion efficiency, the method significantly reduces CO2 emissions. For instance, by maintaining an optimal air-fuel ratio and ensuring complete combustion, the method minimizes the production of CO2 per unit of clinker produced. This not only helps the plant comply with environmental regulations but also contributes to the broader goal of reducing industrial greenhouse gas emissions.

The method further comprises determining an optimizing parameter associated with the real-time process parameters received during a third time period subsequent to the identified anomalous event. The third time period is a crucial phase that follows a deployment of the sequence of optimized actions aimed at neutralizing the anomalous event. During this period, the industrial control system continues to monitor a performance of the cement kiln to ensure that the corrective actions have effectively stabilized a cement manufacturing process.

The optimizing parameter is a metric used to evaluate a performance of the cement kiln and the effectiveness of the sequence of optimized actions. Examples of the optimizing parameter include a standard deviation of temperature readings, a variance in pressure levels, and a consistency of fuel feed rates. For instance, if the cement kiln's temperature readings exhibit minimal fluctuation during the third time period, the standard deviation would be low, indicating effective stabilization. Similarly, a consistent pressure level with low variance would signify that the cement kiln is operating smoothly.

The method further comprises storing the sequence of optimized actions and a plurality of resulting process parameters in the digital database, based on the determined optimizing parameter. The plurality of resulting process parameters refers to a specific readings and metrics that indicate the cement kiln's performance following the implementation of the sequence of optimized actions. The plurality of resulting process parameters includes variables such as a temperature in different zones of the cement kiln, the pressure within the cement kiln, the alite content of the clinker, and the levels of free lime in the clinker. For instance, if implementation of the sequence of optimized actions led to a consistent temperature of 1450°C in the sintering zone and stable pressure readings of 1.2 bar, the temperature and pressure values would be recorded as part of the plurality of resulting process parameters.

Another example of the plurality of resulting process parameters includes the fuel feed rate and air flow rate following the corrective actions. If implementation of the sequence of optimized actions involved increasing the coal feed rate to 5 kg/min and adjusting the air flow rate to 20 m³/min, the sequence of optimized actions would be stored as resulting process parameters. Maintaining optimal fuel feed and air flow rates ensures that the cement kiln operates efficiently and minimizes fuel consumption, leading to reduced production costs. The sequence of optimized actions is only stored if there is a high optimizing parameter, indicating that the actions led to successful stabilization and optimal performance of the cement kiln.

For example, if the standard deviation of temperature readings remains low and pressure levels are stable throughout the third time period, the optimizing parameter would be considered high. This high optimizing parameter signifies that the corrective actions were effective and achieved the desired outcomes.

Storing the sequence of optimized actions and the plurality of resulting process parameters in the digital database serves multiple purposes. For example, the stored sequences are available for future use, providing a valuable reference for similar anomalous events. For instance, if a similar temperature fluctuation occurs in the future, the industrial control system can retrieve the stored sequence of actions that previously led to successful stabilization.

In one example, the stored sequences are used for training the optimizing algorithm. By continuously updating the digital database with successful sequences of optimized actions, the optimizing algorithm can learn from past experiences and improve its predictive capabilities. For example, the optimizing algorithm can analyze patterns in the stored data to identify a most effective actions for different types of anomalies. A continuous learning process enhances an accuracy and effectiveness of the optimizing algorithm, ensuring that future recommendations are increasingly reliable and data-driven.

The method further comprises utilizing the stored sequence to enhance future predictions and optimizations through continuous learning and adaptation of the machine learning algorithm. Future predictions and optimizations involve the algorithm analyzing historical data to forecast potential anomalies and recommend proactive measures to prevent them. For example, if the algorithm identifies a pattern of temperature fluctuations that typically precedes a kiln shutdown, it can predict such an event and suggest adjustments to the fuel feed rate and air flow to stabilize the temperature before the shutdown occurs. This proactive approach minimizes downtime and enhances overall efficiency of operations of the cement kiln.

Continuous learning and adaptation of the optimizing algorithm are achieved by constantly updating the optimizing algorithm with new data from the stored sequences. Each time a sequence of optimized actions successfully neutralizes an anomaly, the optimizing algorithm incorporates information to refine predictive models. For instance, if an adjustment to the air flow rate proved effective in stabilizing the cement kiln during a specific disturbance, the optimizing algorithm will learn to prioritize similar actions in future scenarios. Thus, such an iterative process ensures that the algorithm becomes more accurate and effective over time, continually improving ability to manage operations of the cement kiln.

The method further comprises providing an interactive user interface for operators to view the plurality of real-time process parameters, historical data, and recommendations of the sequence of optimized actions. The interactive user interface serves as a crucial tool for operators, enabling them to monitor a performance of the cement kiln and make informed decisions. Thus, the interactive user interface can be presented in various ways, such as a dashboard displaying key metrics like temperature, pressure, and fuel feed rate in real-time. Operators can see graphical representations of these parameters, allowing them to quickly identify trends and anomalies.

The interactive user interface also provides access to historical data, enabling operators to review past events and actions taken to resolve them. For example, an operator can look up a previous instance of a temperature spike and see the sequence of actions that successfully stabilized the cement kiln. The historical context helps operators understand the rationale behind specific recommendations and enhances their decision-making process.

Optimization recommendations are another critical feature of the interactive user interface. The automation module is configured to display suggested actions based on real-time data and historical insights. For instance, if the algorithm detects a drop in temperature, the interface might recommend increasing the coal feed rate and adjusting the air flow. Operators can review these recommendations and decide whether to implement them manually or allow the system to do so automatically.

The advantages of utilizing the stored sequence to enhance future predictions and optimizations through continuous learning and adaptation of the machine learning algorithm include more accuracy and effectiveness in predictions of the sequence of optimized actions. Continuous learning process allows the optimizing algorithm to adapt to changing conditions, ensuring that the optimizing algorithm can handle a wide range of scenarios. The interactive user interface empowers operators by providing them with real-time data, historical context, and actionable recommendations, leading to more informed and effective decision-making.

The environmental advantages of deploying the sequence of optimized actions are significant. By maintaining stable kiln operations, the method ensures that fuel is burned more efficiently, leading to reduced emissions of CO2 and other pollutants. For instance, by optimizing the air-fuel ratio and maintaining consistent temperatures, the cement kiln operates more cleanly, contributing to lower greenhouse gas emissions and a smaller environmental footprint. Additionally, the reduction in thermal cycling and operational disruptions minimizes the wear and tear on kiln components, thereby prolonging the lifespan of critical equipment and reducing waste from frequent replacements.

Furthermore, advantageously, minimizing downtime and maintaining stable operations, the cement plant can maximize a production output, thereby increasing revenue. Additionally, efficient fuel usage and optimized resource management result in cost savings. For example, by avoiding overuse of expensive fuels and reducing energy waste, the cement plant can significantly lower its operational expenses. Moreover, reduction in maintenance costs due to less frequent replacements of kiln components further enhances the cement plant's profitability. A return on investment (ROI) is quickly realized as initial costs of implementing the optimzing algorithms and automated control systems are offset by the continuous operational savings and increased production efficiency.

Furthermore, deployment of advanced machine learning algorithms and real-time data analytics enhances a precision and responsiveness of kiln operations. By continuously learning from historical data and adapting to new patterns, the automation module improves predictive capabilities, ensuring that most effective corrective actions are taken promptly. This leads to a more consistent and reliable operation, reducing the reliance on operator expertise and minimizing human error. Furthermore, the integration of the automation module into existing control systems allows for seamless implementation and real-time adjustments, ensuring that the cement kiln operates within optimal parameters at all times. The cloud-based infrastructure provides scalable computing resources, enabling the system to handle large datasets and complex calculations, further enhancing its effectiveness and efficiency.

The reduction in labor is a significant advantage of the present invention. By automating the monitoring and adjustment of kiln parameters, the need for constant manual intervention by operators is greatly diminished. This not only reduces the workload on staff but also minimizes the potential for human error. Operators are no longer required to continuously monitor the cement kiln's performance and make adjustments based on their observations. Instead, they can rely on the automation module and control systems to handle these tasks, allowing them to focus on higher-level decision-making and maintenance activities. This shift not only enhances operational efficiency but also reduces labor costs and the strain on human resources.

Quick responsiveness is another critical advantage offered by the system. The real-time data analysis and automated adjustments enable the system to detect and respond to anomalies almost instantaneously. For instance, if an unexpected drop in temperature is detected, the system can immediately adjust the fuel feed rate and air flow to stabilize the cement kiln's temperature. This rapid response minimizes the duration of suboptimal operating conditions, preventing minor issues from escalating into major problems. The ability to quickly address disturbances ensures that the cement kiln operates smoothly, reducing downtime and maintaining consistent production rates. This quick responsiveness is particularly beneficial in maintaining the quality and efficiency of the cement production process.

The quality of the cement produced is significantly enhanced through the optimized control of kiln parameters. By maintaining consistent operating conditions, the system ensures that the clinker produced is of high and uniform quality. Fluctuations in temperature, pressure, and chemical composition can lead to variations in the clinker, affecting the final cement product's strength and durability. The automated system's precise control over these parameters results in a more consistent and reliable product. High-quality clinker translates to superior cement, which meets industry standards and customer expectations. This improvement in product quality can lead to increased customer satisfaction and a stronger market position for the cement plant.

Wear and tear of the cement kiln are substantially reduced through optimized operational control. Maintaining stable temperatures and operating conditions prevents the frequent thermal cycling that can damage kiln linings and other components. By reducing the occurrence of extreme conditions, the system minimizes the stress on the cement kiln's materials, prolonging their lifespan and reducing the need for frequent maintenance and replacements. This not only lowers maintenance costs but also enhances the overall reliability and availability of the cement kiln. Reduced wear and tear mean that the cement kiln can operate for longer periods without interruption, contributing to higher productivity and lower operational costs.

The object of the present invention is further achieved by a system for optimizing process parameters in a cement kiln. The system comprises one or more sensors configured to monitor and collect data on a plurality of process parameters in the cement kiln, and a processing unit designed to analyze the collected data to determine the occurrence of an anomalous event. The system stores historical process data, including a plurality of historical events and signature process patterns, each pattern comprising a sequence of parameter changes occurring in a first time period prior to each historical event. The processing unit determines at least one signature process pattern associated with at least one historical event similar to the anomalous event. It then generates a sequence of optimized actions based on the determined signature process pattern by applying a machine learning algorithm to a plurality of past user actions, performed by a user, in response to the historical event. The system deploys the sequence of optimized actions to neutralize the anomalous event and thereby optimize the plurality of process parameters in the cement kiln. Additionally, the processing unit is further configured to analyze historical process data, correlate parameter changes to the plurality of past user actions, and apply an optimizing algorithm on a set of parameter values in a second time period to generate the sequence of optimized actions. The optimizing algorithm determines a stability parameter of the set of parameter values and selects an optimal sequence of historical user actions to generate the optimized actions.

The object of the invention is further achieved through a computer program product for optimizing fuel consumption in a cement manufacturing kiln. The computer program product comprises a non-transitory computer-readable medium having program instructions stored thereon. When executed by a processor, the program instructions cause the processor to perform a method as claimed in claims 1 to 11.

The present invention is further described hereinafter with reference to illustrated embodiments shown in the accompanying drawings, in which the features of the individual objects claimed or described can readily be combined with one another. Hereinafter, the invention is illustrated and explained in more detail by way of example with reference to the figures. The features shown in the figures can be combined by a person skilled in the art to form new embodiments without departing from the scope of the invention. Elements of the same type are given the same reference character. It is shown in:
- FIG 1: is a block diagram of a system for automatically optimizing process parameters in a cement kiln 102, according to an embodiment of the present invention;
- FIG 2: is a block diagram of an industrial control system, such as those shown in FIG. 1, in which an embodiment of the present invention can be implemented;
- FIG 3: is a process flowchart illustrating an exemplary method of automatically optimizing fuel consumption in a cement kiln 102, according to an embodiment of the present invention; and
- FIG 4A-E: is a graphical representation of an implementation of an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

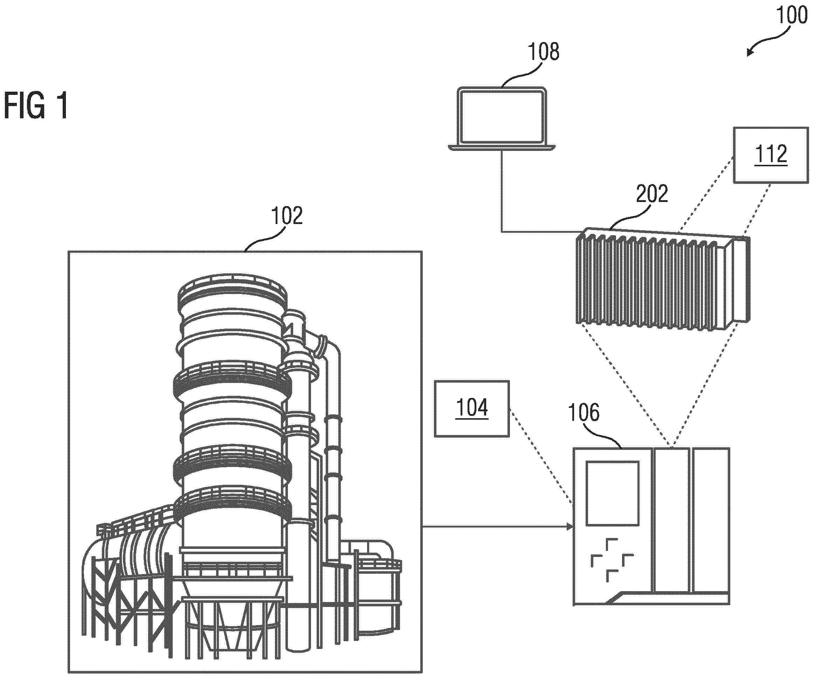

FIG 1 is a block diagram of a system 100 for automatically optimizing process parameters in a cement kiln 102, according to an embodiment of the present invention. In FIG 1, the system 100 includes one or more sensors 104, an industrial control system 106, and a human machine interface 108. The industrial control system 106 comprises a processing unit 202 such as a programmable logic controller. The processing unit 202 comprises an automation module 112 which is configured to automatically optimize the fuel consumption in the cement kiln 102.

The cement kiln 102 is a large, cylindrical vessel which is used during a pyroprocessing stage of cement production. Inside the cement kiln 102, a plurality of raw materials are pyroprocessed to generate clinker. Examples of the plurality of raw materials include limestone, clay, or shale. The pyroprocessing happens at very high temperatures and is thus fuel-intensive. Examples of fuel consumed includes coal, natural gas, and oil.

The outputs of the cement kiln 102 are primarily the clinker and waste gases. A quality and one or more properties of clinker has a significant impact on a final strength and a quality of cement produced by the cement manufacturing plant. Since the quality of clinker is proportional to a stability of the cement kiln 102, optimizing the fuel consumption becomes of paramount importance.

The one or more sensors 104 are configured to capture a plurality of operational parameters from the cement kiln 102. Examples of the one or more sensors 104 includes but is not limited to temperature sensors that monitor the cement kiln's 102 heat to prevent overheating, vibration sensors on grinding equipment to detect imbalances or potential failures, and gas analyzers that measure emissions and adjust operations to meet environmental regulations.

The industrial control system 106 is configured to coordinate and optimize one or more stages of cement production. The industrial control system 106 is configured to process inputs from the one or more sensors 104 to manage activities such as precise mixing of raw materials, control of kiln temperature for clinker production, and timing of cooling processes to ensure quality of the final cement.

The human machine interface 108 is configured to enable operators to view one or more process parameters associated with the industrial control system 106. Operators can use HMI panels to monitor process variables like kiln temperature and motor speeds, adjust operational parameters, and troubleshoot issues from a centralized location. For instance, the HMI is configured to display diagnostics from the cement kiln 102, to allow operators to make immediate adjustments or shutdowns to prevent damage or inefficiencies in the cement kiln 102.

The processing unit 202, is typically a Programmable Logic Controller (PLC), which is crucial for executing complex control algorithms. In cement production, the PLC can automate repetitive tasks such as the sequential operation of valves for loading and unloading materials or the regulation of the grinding and baking processes. The processing unit 202 is further configured to analyze the plurality of operational parameters and control the cement kiln 102 based on the analysis.

The automation module 112 is pivotal for optimizing process parameters, which is crucial for both economic and environmental aspects of production of cement. The automation module 112 incorporates software that, when executed by the processing unit 202, optimizes process parameters in the cement kiln 102. For instance, the automation module 112 is configured to continuously analyze data from the one or more sensors 104 to monitor temperatures, pressures, and flow rates of gases and materials in the cement kiln 102. By processing the data, the automation module 112 adjusts a fuel feed rate and an air supply to maintain optimal combustion conditions, thereby reducing waste and lowering emissions

The automation module 112 further causes the processing unit 202 to determine the occurrence of an anomalous event in the cement kiln 102 by analyzing the plurality of real-time process parameters in the cement kiln 102. The plurality of real-time process parameters may be captured by the one or more sensors 104 which are placed within the cement kiln 102. The anomalous event in the context of the cement kiln 102 refers to any deviation from the optimal operating condition within the cement kiln 102. Such anomalous events include fluctuations in temperature, pressure, or chemical composition.

The optimal operating condition refers to a state where the cement kiln 102 operates at peak efficiency, maintaining consistent temperatures, pressures, and chemical compositions that ensure high-quality clinker production. In one example, the optimal operating condition is defined by a set of user-defined values for the plurality of process parameters for the cement kiln 102. For example, the optimal operating condition may be defined as an operating condition in which a sintering temperature of the cement kiln 102 is between a user-defined temperature range, a pressure is within a user-defined range, and chemical compositions of material within the cement kiln 102 are identical to a user-defined chemical composition.

Remaining in the optimal operating condition is crucial because it directly impacts energy efficiency, production rates, and overall quality of cement produced. Fluctuations from the optimal operating condition can lead to increased fuel consumption, potential damage to the cement kiln 102, and inconsistent product quality. Maintaining the optimal operating condition minimizes the risk of equipment shutdowns, reduces production costs, and ensures compliance with environmental regulations by controlling emissions. Thus, the importance of remaining in the optimal operating condition cannot be overstated, as it ensures stability, efficiency, and profitability of the cement manufacturing process. Thus, the occurrence of the anomalous event can disrupt the cement manufacturing process.

The automation module 112 further causes the processing unit 202 to continuously monitor and analyze the plurality of process parameters in the cement kiln 102. The plurality of process parameters include variables like temperature, pressure, and chemical compositions such as alite and free lime levels. The plurality of process parameters are captured using the network of sensors 104 strategically placed throughout the cement kiln 102. For example, temperature sensors measure heat in different zones of the cement kiln 102, while gas analyzers check the composition of gases emitted during the cement manufacturing process.

The occurrence of the anomalous event can potentially cause significant harm in the cement kiln 102. The anomalous event can lead to the production of off-spec clinker, which negatively impacts the quality of the final cement product. Moreover, the anomalous event can cause operational inefficiencies, resulting in higher energy consumption and increased emissions of CO2. In severe cases, the anomalous events can lead to unplanned shutdowns, causing substantial production losses and requiring costly interventions to restore normal operations.

The automation module 112 further causes the processing unit 202 to analyze the plurality of real-time process parameters using advanced data analytics techniques and machine learning algorithms. The advanced data analytics techniques include time-series analysis, which helps in understanding historical trends and patterns in the plurality of process parameters. Time-series analysis helps in identifying recurring patterns and anomalous events, thereby facilitating early detection of potential anomalies.

The machine learning algorithms include supervised learning algorithms, unsupervised learning algorithms, and reinforcement learning algorithms. The supervised learning algorithms, such as decision trees and support vector machines, are trained on historical data to predict the likelihood of the anomalous event based on current process conditions. The supervised learning algorithms use labeled data to learn the relationship between the plurality of process parameters and the occurrence of the anomalous event.

The unsupervised learning algorithms, such as clustering and principal component analysis, are employed to identify hidden patterns and correlations in the plurality of process parameters without prior labeling. Clustering algorithms, like K-means, group similar data points together, allowing the identification of unusual patterns that may signify an impending anomaly. Principal component analysis reduces dimensionality of data, making it easier to visualize and understand complex relationships between the plurality of process parameters.

Deep learning techniques, such as convolutional neural networks and recurrent neural networks, are also applicable. Convolutional neural networks can analyze spatial data from the sensor networks, while recurrent neural networks are particularly effective in handling sequential data, capturing temporal dependencies in the process parameters.

The automation module 112 further causes the processing unit 202 to analyze historical data to determine the plurality of historical events which have occurred in the past. The historical data comprises the plurality of past process parameters and the plurality of control parameters. The plurality of process parameters includes variables like temperature, pressure, alite content, and free lime levels. The plurality of process parameters are critical for maintaining optimal kiln operation. The plurality of control parameters consists of settings that the one or more operators can adjust to influence the plurality of process parameters, such as fuel feed rate, kiln rotation speed, and air flow rates.

The plurality of historical events are specific occurrences in the past where the cement kiln 102 experienced deviations from normal operating conditions, leading to anomalies or disturbances. Examples of the plurality of historical events include instances where the cement kiln 102 experienced a sudden spike in temperature, leading to overheating, or cases where a fuel mix was altered, causing fluctuations in combustion efficiency. The automation module 112 further causes the processing unit 202 to determine, based on the analysis, the plurality of signature process patterns associated with each of the plurality of historical events. The plurality of signature process patterns associated with historical events are distinctive sequences of changes in the plurality of process parameters that precede and characterize the plurality of historical events.

The plurality of signature process patterns are determined by evaluating the plurality of sequences of parameter changes that occurred prior to each historical event of the plurality of historical events. The plurality of sequences of parameter changes refer to variations in values of the plurality of process parameters and the plurality of control parameters of the cement kiln 102, prior to each of the plurality of historical events. For example, an increase in the sintering zone temperature or a sudden drop in calciner temperature are parameter changes.

The plurality of sequences of parameter changes occur as operators or automated systems adjust the plurality of control parameters in response to real-time process conditions. For example, an operator may increase the fuel feed rate to raise the cement kiln 102 temperature, or decrease the air flow rate to control combustion efficiency.

Advantageously, by determining the plurality of historical events, more effective strategies for future anomaly detection and mitigation may be developed. Historical analysis helps in predicting potential disturbances and optimizing the response of the cement kiln 102 to similar future events.

For example, a first signature process pattern of the plurality of signature process patterns may include a sequence where a gradual increase in kiln temperature is followed by a sharp rise in pressure and a subsequent drop in the alite content of the clinker. Thus, the signature process pattern indicates a progression towards overheating, which can lead to clinker quality degradation if not addressed promptly. In another example, a second signature process pattern involves a scenario where a sudden change in fuel type results in fluctuating temperatures and inconsistent burning times, ultimately causing a decline in combustion efficiency. The second signature process pattern may start with a minor temperature fluctuation, followed by irregular pressure changes and a corresponding shift in the chemical composition of the clinker.

Additionally, a third signature process pattern might include a situation where an unexpected drop in calciner temperature is accompanied by an increase in the cement kiln 102 rotation speed and a subsequent alteration in the fuel feed rate. The third signature process pattern can signify an impending instability in the calcination process, which might lead to incomplete clinker formation. In a fourth signature process pattern, a temporary malfunction of the satellite burner leads to a series of adjustments in air flow and fuel mixture, resulting in a temporary deviation from optimal operating conditions. Thus, the fourth signature process pattern would typically involve an initial drop in temperature, followed by compensatory increases in air flow and adjustments in fuel feed rates to restore stability.

The plurality of signature process patterns are identified by comparing the plurality of process parameters and the plurality of control parameters. The automation module 112 further causes the processing unit 202 to analyze the plurality of sequences of parameter changes that occurred prior to each of the plurality of historical events, thereby identifying the plurality of signature process patterns that consistently led to one or more of the plurality of historical events. By recognizing the plurality of signature process patterns, optimized actions may be generated to neutralize current anomalies, ensuring the cement kiln 102 operates efficiently and consistently.

In one example, the plurality of signature process patterns is determined by the automation module 112 by the application of an artificial intelligence algorithm, such as a convolutional neural network (CNN) or a recurrent neural network (RNN). The convolutional neural network can analyze spatial data from the sensor networks to identify patterns in how temperature, pressure, and chemical compositions change over different zones of the cement kiln 102. For example, the convolutional neural network can detect how a gradual temperature increase in the sintering zone correlates with pressure spikes and changes in alite content, forming a signature process pattern for overheating.

The recurrent neural network (RNN) is particularly effective in handling sequential data and capturing temporal dependencies in the process parameters. For example, the RNN can model how a sudden change in fuel type affects temperature fluctuations and burning times over a sequence of time steps, leading to a signature process pattern indicative of declining combustion efficiency.

An advantage of using convolutional neural networks (CNNs) and RNNs lies in their ability to learn complex, non-linear relationships between process parameters. For instance, the CNN can capture intricate spatial patterns that might be missed by simpler algorithms, while the RNN can model long-term dependencies that are crucial for understanding the dynamics of the cement kiln. By employing these advanced machine learning techniques, the automation module 112 further causes the processing unit 202 to generate more accurate and reliable signature process patterns, ultimately leading to more effective anomaly detection and mitigation.

The automation module 112 further causes the processing unit 202 to compare one or more patterns in the plurality of real-time process parameters associated with the anomalous event to each signature process pattern of the plurality of signature process patterns. The comparison is executed to determine a similar pattern by analyzing the collected plurality of real-time process parameters, such as temperatures, pressures, and chemical compositions, against the plurality of signature process patterns.

In one example, one or more machine learning algorithms determine the one or more patterns in the plurality of real-time process parameters and then compare the one or more patterns against the plurality of signature process patterns. The one or more machine learning models calculate a degree of similarity between the one or more patterns in the plurality of real-time process parameters and each signature process pattern of the plurality of signature process patterns. The degree of similarity is determined by examining the sequence and magnitude of parameter changes in the plurality of real-time process parameters and the historical data.

The automation module 112 further causes the processing unit 202 to determine a similar pattern from the plurality of signature process patterns. The similar pattern is defined as a signature process pattern that is similar to the one or more patterns in the plurality of real-time process parameters. The degree of similarity may be measured in terms of trends, values, and timing. For example, if a real-time process parameter indicates a sudden drop in calciner temperature followed by a rise in sintering zone temperature, the automation module 112 determines historical events where a similar sequence occurred. The machine learning algorithm measures the similarity by calculating metrics such as correlation coefficients or Euclidean distances between real-time data points and historical data points.

Advantageously, the automation module 112 increases accuracy in predicting the best course of action which can be taken as a response to the occurrence of the anomalous event, by leveraging extensive historical data to inform decision-making. By identifying a similar pattern, the automation module 112 ensures that optimized actions are recommended based on proven successful responses from the past, thereby reducing the time required to stabilize the cement kiln. Use of the one or more machine learning algorithms ensures that predictive capabilities are continuously improved, leading to more efficient and consistent kiln operations.

The automation module 112 further causes the processing unit 202 to select at least one signature process pattern from the plurality of signature process patterns. The at least one signature process pattern is selected based on the comparison. The selected signature process pattern is used as a basis for generating a sequence of optimized actions recommended to be performed to neutralize the anomalous event. Selecting the at least one signature process pattern involves identifying a historical sequence of parameter changes that most closely matches the plurality of real-time process parameters associated with the occurrence of the anomalous event. In one example, the at least one signature process pattern is similar to the one or more patterns in the plurality of real-time process parameters.

In one example, the at least one signature process pattern is selected by ranking the plurality of signature process patterns on a calculated set of degrees of similarity with the plurality of real-time process parameters. The at least one signature process pattern, of the plurality of signature process patterns, with the highest similarity score is chosen as the most relevant signature process pattern that mirrors the current anomalous event. The at least one signature process pattern is associated with at least one historical event. The at least one historical event is a past anomalous event which most closely mirrors the determined anomalous event. Thus, the selected at least one signature process pattern serves as a template for generating the sequence of optimized actions. The selected at least one signature process pattern provides a proven sequence of parameter adjustments that successfully stabilized the cement kiln in a similar past situation.

Advantageously, selection of the at least one signature process pattern increases precision in addressing anomalous events and reduces response time. The automation module 112 ensures that the generated sequence of optimized actions is more likely to succeed in restoring stability of the cement kiln, upon implementation. Thus, trial-and-error interventions by operators are minimized, leading to more consistent and efficient kiln operations. Furthermore, use of a well-documented historical pattern ensures that the corrective actions are based on empirical evidence, thereby enhancing the reliability and effectiveness of the optimization process. The automation module 112 ultimately contributes to improved fuel efficiency, reduced emissions, and minimized production losses by providing targeted and data-driven optimization recommendations.

In one example, the selected at least one signature process pattern comprises a sequence of parameter changes which occurred in the first time period prior to the occurrence of the at least one historical event in the past. It is noted that the at least one historical event is similar to the anomalous event. The sequence of parameter changes comprises changes in the plurality of process parameters in the first time period. The sequence of parameter changes further comprises specific adjustments made by a user to the plurality of control parameters within the cement kiln, such as fuel feed rates, kiln rotation speeds, and temperature setpoints, in the first time period leading up to the occurrence of the at least one historical event in the past. The specific adjustments are recorded over a defined duration, known as the first time period, which leads up to the occurrence of the at least one historical event.

In one example, the first time period is a predefined duration during which the sequence of parameter changes is monitored and analyzed. For instance, if the first time period is T-30, this indicates a duration of 30 minutes before the occurrence of the at least one historical event. In this context, T-30 means that the sequence of parameter changes that took place in the 30 minutes leading up to the at least one historical event is analyzed to determine the sequence of optimized actions.

Consider an example where the anomalous event involves a sudden drop in calciner temperature within the cement kiln. The at least one historical event, which is similar to the anomalous event, might also have exhibited a similar drop in calciner temperature. During the first time period of T-30, the automation module 112 is configured to analyze the sequence of parameter changes, such as adjustments to the fuel feed rate and kiln rotation speed, that were implemented to address a drop in temperature during the at least one historical event. Analysis of the sequence of parameter changes provides insights into effective corrective actions that can be applied to mitigate the current anomalous event.

By examining the sequence of parameter changes that occurred before the at least one historical event, the automation module 112 determines which specific adjustments were successful in restoring stability to operations of the cement kiln. Thus, consistency and reliability of kiln operations are improved, leading to improved process efficiency, reduced fuel consumption, and lower emissions. The automation module 112 ensures that each anomalous event is addressed with optimized actions tailored to specific conditions of the cement kiln, based on the proven effectiveness of historical corrective actions.

The automation module 112 further causes the processing unit 202 to correlate each parameter change in the sequence of parameter changes of the at least one signature process pattern to the plurality of sequences of user actions performed by the user in the past. The plurality of sequences of user actions are performed by the user in response to the at least one historical event.

The automation module 112 utilizes advanced machine learning algorithms, such as neural networks or decision trees, to make the correlation. The advanced machine learning algorithms are adept at identifying patterns and relationships within large datasets. For instance, if the historical event involved a sudden drop in calciner temperature, the advanced machine learning algorithms analyze the sequence of parameter changes that led to this event and how the user adjusted control parameters to rectify the situation. One specific example of the advanced machine learning algorithms is support vector machines (SVMs) configured to classify data points and identify the optimal hyperplane that separates stable from unstable conditions. For example, SVMs can analyze historical data to determine the threshold values of temperature and pressure that distinguish between normal and anomalous kiln operations. By correlating these threshold values with the plurality of past user actions, SVMs can provide actionable recommendations for maintaining stable conditions.

In another example, the advanced machine learning algorithms comprise decision trees used to correlate parameter changes with the plurality of past user actions. The decision trees provide an interpretable model of how different parameter changes lead to historical events and how users responded. For instance, a decision tree might reveal that a combination of increasing the coal feed rate and adjusting the air flow consistently led to the stabilization of kiln temperature following a drop in calciner temperature. By providing a clear and understandable model, decision trees help operators comprehend the rationale behind specific correlations and improve decision-making.

A response from the user typically involves one or more user actions such as adjusting fuel feed rates, modifying kiln rotational speed, or altering air flow rates to stabilize the cement kiln's 102 operating conditions. For example, if the calciner temperature drops, the user may increase the coal feed rate to provide additional heat, thereby stabilizing the temperature. The one or more user actions are crucial as they directly influence the performance and stability of the cement kiln.

Advantages of correlating parameter changes with the plurality of past user actions are manifold. For example, the correlation process involves digitizing and analyzing the expertise of seasoned operators, thereby ensuring that valuable knowledge is systematically captured and utilized, reducing dependency on individual expertise. Furthermore, the time required to stabilize the cement kiln is reduced, leading to reduced production losses and enhanced overall efficiency.

The automation module 112 further causes the processing unit 202 to apply an optimizing algorithm on the plurality of sequences of user actions and the set of parameter values. The set of parameter values refers to specific readings and statuses of various process parameters and control parameters in the cement kiln, such as temperature, pressure, fuel feed rate, and air flow rate, in the second time period. The set of parameter values further comprises the control parameters received from the operators of the cement kiln, after the occurrence of the at least one historical event. The parameter values of the set of parameter values were captured by the sensors in the second time period. The optimizing algorithm generates the sequence of optimized actions based on the application of the optimizing algorithm on the plurality of sequences of user actions and the set of parameter values.

The second time period is a defined duration during which operations of the cement kiln are monitored following the at least one historical event and subsequent user actions. For instance, if the first time period ends at T (the moment the disturbance is addressed), the second time period could extend from T to T+30. T+30 signifies a point in time 30 minutes after the at least one historical event was addressed. During T+30, performance of the cement kiln is closely observed to ensure that implemented actions have effectively stabilized the process. For example, the sequence of optimized actions includes increasing the coal feed rate, adjusting the air flow, or modifying the kiln rotation speed to counteract a temperature drop or pressure fluctuation.

In one example, the optimizing algorithm is a genetic algorithm. The genetic algorithm mimics the process of natural selection to generate the sequence of optimized actions that result in stable kiln operations. During the second time period, the genetic algorithm evaluates various combinations of parameter values, such as different fuel feed rates and air flow settings in the set of parameter values. By iteratively selecting, combining, and mutating best-performing parameter sets, the genetic algorithm converges on the most effective adjustments to maintain stability. For example, the genetic algorithm might determine that a specific combination of increasing the coal feed rate by 5% and reducing the air flow by 3% leads to the most stable temperature and pressure conditions in the cement kiln. The genetic algorithm then recommends these adjustments as part of the sequence of optimized actions.

Another example of the optimizing algorithm is a reinforcement learning algorithm. The reinforcement learning algorithm learns to generate the optimized actions by receiving feedback from the environment-in this case, the cement kiln's 102 operating conditions. During the second time period, the reinforcement learning algorithm continuously monitors the cement kiln's 102 performance and makes incremental adjustments to control parameters, such as modifying the cement kiln rotation speed or altering the fuel mixture. The reinforcement learning algorithm receives rewards or penalties based on the outcomes of these adjustments, such as achieving stable temperature or experiencing pressure fluctuations. Over time, the reinforcement learning algorithm learns the best strategies to optimize kiln operations. For example, the reinforcement learning algorithm might learn that gradually increasing the fuel feed rate while maintaining a steady air flow rate leads to optimal combustion efficiency and clinker quality. The reinforcement learning algorithm can then implement these learned strategies as part of the sequence of optimized actions.

Advantageously, using the genetic algorithm allows for the exploration of a wide range of potential solutions, ensuring that the most effective combination of parameter values is identified. The genetic algorithm's iterative process ensures that the cement kiln operates within optimal parameters, reducing the risk of instability and improving overall efficiency. Similarly, the reinforcement learning algorithm provides the advantage of continuous learning and adaptation, allowing the system to improve its decision-making capabilities over time. By receiving real-time feedback and adjusting its strategies accordingly, the reinforcement learning algorithm ensures that the cement kiln remains stable even in the face of changing conditions. Both algorithms contribute to reduced energy consumption, lower production costs, and enhanced clinker quality by providing precise and timely optimization recommendations.

Advantageously, applying the optimizing algorithm during the second time period is crucial to evaluate the effectiveness of the past user actions taken to rectify the historical event. By analyzing the process parameters during T+30, the optimizing algorithm assesses whether the cement kiln has returned to stable conditions and makes further recommendations if necessary. For example, if the calciner temperature remains unstable during T+30, the algorithm might suggest additional adjustments to the fuel feed rate or air flow to achieve the desired stability.

Advantageously, applying the optimizing algorithm during the second time period allows for real-time fine-tuning of the operations of the cement kiln, ensuring that any residual instabilities are promptly addressed. By continuously monitoring and adjusting the process parameters, the automation module 112 enhances the overall efficiency of the cement kiln, leading to reduced energy consumption and lower production costs. Furthermore, reliance on operator expertise is reduced, making operations of the cement kiln more consistent and reliable. Finally, the systematic application of the optimizing algorithm during T+30 ensures that the cement kiln operates within optimal parameters, thereby improving clinker quality and reducing emissions.

The optimizing algorithm determines a stability parameter of the set of parameter values, subsequent to the implementation of each sequence of the sequences of historical user actions.

The stability parameter is a quantitative measure that indicates how stable the cement kiln's 102 operation is over a given period. For example, the stability parameter can be represented by metrics such as the standard deviation of temperature readings, the consistency of pressure levels, or the uniformity of fuel feed rates. A low standard deviation in temperature readings would indicate a stable thermal environment within the cement kiln.

An exemplary representation of the stability parameter can be the variance in calciner temperature over the second time period. If the calciner temperature maintains a consistent value with minimal fluctuation, the variance would be low, thereby indicating a high stability parameter. Conversely, large fluctuations would result in a high variance, indicating a low stability parameter.

In one example, the automation module 112 selects an optimal sequence of past user actions from the sequences of user actions in the historical data. The optimal sequence of past user actions refers to a specific set of actions taken by users in the past that led to the most stable kiln operation in the past. For example, if historical data shows that increasing the coal feed rate followed by adjusting the air flow resulted in a stable temperature, a sequence comprising increasing the coal feed and adjusting the air flow would be considered optimal. The optimizing algorithm selects the optimal sequence of historical user actions based on the stability parameter, ensuring that chosen actions have consistently led to stable conditions in the past.

In one example, the sequence of optimized actions is generated based on the selected optimal sequence of past user actions. Once the optimizing algorithm identifies the optimal sequence of past user actions, the optimizing algorithm generates the sequence of optimized actions to be implemented in the current scenario. For instance, if the optimal sequence involved first increasing the coal feed rate and then adjusting the air flow, the optimizing algorithm generates these actions as recommended steps to achieve stability. By following the sequence of optimized actions, the cement kiln can quickly return to stable operating conditions, minimizing downtime and improving overall efficiency.

Advantageously, determining the stability parameter and selecting the optimal sequence of past user actions ensures that generation of the optimized actions is grounded in proven, data-driven strategies, thereby enhancing reliability.

In other words, the automation module 112 further causes the processing unit 202 to generate, based on the determined at least one signature process pattern, a sequence of optimized actions which are configured to neutralize the anomalous event. The sequence of optimized actions is generated by application of the optimizing algorithm on the set of parameter values associated with the at least one historical event. The set of parameter values comprises information associated with the at least one historic user action performed by the user in the past in response to the occurrence of the at least one historical event.

The real-world benefits of such an approach are significant. Firstly, the automation module 112 further causes the processing unit 202 to reduce the reliance on operator expertise, making decisions more consistent and less prone to human error. Cement plants often face challenges due to variations in operator skill levels, which can lead to inconsistent responses to similar problems. By digitizing and analyzing historical actions, the automation module 112 ensures that best practices are systematically applied, leading to more uniform and effective process control.

The automation module 112 further causes the processing unit 202 to automatically adjust control parameters in the cement kiln based on the generated sequence of optimized actions. Automatic adjustment is implemented through the industrial control system 106 that interfaces with the existing hardware and software infrastructure of the cement kiln. For example, the industrial control system 106 may include programmable logic controllers (PLCs) and distributed control systems (DCS) that receive instructions from the machine learning algorithm and execute the necessary adjustments in real-time.

The industrial control system 106 comprises several key components such as sensors, actuators, and industrial devices. The industrial control system 106 automatically adjusts the plurality of control parameters by sending commands to the PLCs and DCS. Advantageously, automatically adjusting control parameters minimizes the response time to disturbances, thereby reducing the risk of prolonged instability and potential shutdowns. By automatically implementing proven corrective actions, the industrial control system 106 ensures that the cement kiln operates within optimal parameters, enhancing overall efficiency. The automation module 112 further causes the processing unit 202 to provide real-time feedback to the user on the implemented sequence of optimized actions and the effects of deployment of the sequence of optimized actions.

In a real-world scenario, consider a cement plant where the cement kiln operator is alerted to a sudden fluctuation in the sintering zone temperature. The industrial control system 106 quickly identifies the optimal sequence of past user actions to counter this fluctuation and automatically adjusts the control parameters accordingly, such as modifying the fuel feed rate and adjusting the air flow.

The industrial control system 106 provides real-time feedback to an operator through an interactive user interface. The interactive user interface displays the sequence of optimized actions-such as the increased coal feed rate and adjusted air flow-and immediate effects on operating conditions of the cement kiln. For example, the interface might show a stabilization in the sintering zone temperature, a reduction in pressure fluctuations, and an improvement in clinker quality. By presenting this information in real-time, the operator can monitor the effectiveness of the deployed actions and gain insights into how specific adjustments influence the cement kiln's 102 performance.

In other words, the automation module 112 further causes the processing unit 202 to deploy the sequence of optimized actions on the cement kiln to neutralize the anomalous event and thereby optimize the plurality of process parameters in the cement kiln. The advantage of deploying the sequence in this manner lies in the immediacy and precision of the response. The plurality of optimized actions can be deployed immediately, ensuring that any detected anomaly is addressed without delay. For example, if a sudden drop in kiln temperature occurs, the automation module 112 can instantly increase the fuel feed rate and adjust the air flow, thereby stabilizing the temperature before it leads to further complications.

In one example, the sequence of optimized actions is deployed at T+1. T+1 refers to the moment immediately following the detection of an anomaly. By deploying the plurality of optimized actions at T+1, the automation module 112 ensures that corrective measures are implemented as soon as a disturbance is identified. Thus, rapid response minimizes the duration of instability and prevents the anomaly from escalating into a more severe issue.

The environmental advantages of deploying the sequence of optimized actions are significant. By maintaining stable kiln operations, the automation module 112 ensures that fuel is burned more efficiently, leading to reduced emissions of CO2 and other pollutants. For instance, by optimizing the air-fuel ratio and maintaining consistent temperatures, the cement kiln operates more cleanly, contributing to lower greenhouse gas emissions and a smaller environmental footprint.

The financial advantages of this approach are also substantial. By minimizing downtime and maintaining stable operations, the cement plant can maximize its production output, thereby increasing revenue. Additionally, efficient fuel usage and optimized resource management result in cost savings. For example, by avoiding overuse of expensive fuels and reducing energy waste, the plant can significantly lower its operational expenses.

The return on investment (ROI) related advantages are evident when considering the long-term benefits of deploying the plurality of optimized actions. The initial investment in the machine learning algorithm and automated control system is quickly recouped through increased efficiency, reduced downtime, and lower operational costs. As the system continuously learns and improves, the ROI continues to grow, making the investment highly worthwhile.

Wear and tear based advantages are also notable. By maintaining optimal operating conditions, the automation module 112 reduces the stress on kiln components, thereby extending their lifespan. For example, consistent temperature control prevents thermal cycling, which can cause damage to refractory materials and other critical components. This leads to lower maintenance costs and less frequent replacements, further enhancing the plant's profitability.

The CO2 reduction advantages are particularly important in the context of global efforts to combat climate change. By optimizing fuel usage and improving combustion efficiency, the automation module 112 significantly reduces CO2 emissions. For instance, by maintaining an optimal air-fuel ratio and ensuring complete combustion, the automation module 112 minimizes the production of CO2 per unit of clinker produced. This not only helps the plant comply with environmental regulations but also contributes to the broader goal of reducing industrial greenhouse gas emissions.

The automation module 112 further causes the processing unit 202 to determine an optimizing parameter associated with the real-time process parameters received during the third time period subsequent to the identified anomalous event. The third time period is a crucial phase that follows the deployment of the sequence of optimized actions aimed at neutralizing the anomalous event. During this period, the industrial control system 106 continues to monitor the performance of the cement kiln to ensure that the corrective actions have effectively stabilized the cement manufacturing process.

The optimizing parameter is a metric used to evaluate the performance of the cement kiln and the effectiveness of the sequence of optimized actions. Examples of the optimizing parameter include the standard deviation of temperature readings, the variance in pressure levels, and the consistency of fuel feed rates. For instance, if the cement kiln's 102 temperature readings exhibit minimal fluctuation during the third time period, the standard deviation would be low, indicating effective stabilization. Similarly, a consistent pressure level with low variance would signify that the cement kiln is operating smoothly.

The automation module 112 further causes the processing unit 202 to store the sequence of optimized actions and the resulting process parameters in the digital database, based on the determined optimizing parameter. The resulting process parameters refer to specific readings and metrics that indicate the cement kiln's 102 performance following the implementation of the sequence of optimized actions. The resulting process parameters include variables such as the temperature in different zones of the cement kiln, the pressure within the cement kiln, the alite content of the clinker, and the levels of free lime in the clinker. For instance, if the implementation of the sequence of optimized actions led to a consistent temperature of 1450°C in the sintering zone and stable pressure readings of 1.2 bar, the temperature and pressure values would be recorded as part of the resulting process parameters.

Another example of the resulting process parameters includes the fuel feed rate and air flow rate following the corrective actions. If the implementation of the sequence of optimized actions involved increasing the coal feed rate to 5 kg/min and adjusting the air flow rate to 20 m³/min, the sequence of optimized actions would be stored as resulting process parameters. Maintaining optimal fuel feed and air flow rates ensures that the cement kiln operates efficiently and minimizes fuel consumption, leading to reduced production costs. The sequence of optimized actions is only stored if there is a high optimizing parameter, indicating that the actions led to successful stabilization and optimal performance of the cement kiln.

For example, if the standard deviation of temperature readings remains low and pressure levels are stable throughout the third time period, the optimizing parameter would be considered high. This high optimizing parameter signifies that the corrective actions were effective and achieved the desired outcomes.

Storing the sequence of optimized actions and the resulting process parameters in the digital database serves multiple purposes. For example, the stored sequences are available for future use, providing a valuable reference for similar anomalous events. For instance, if a similar temperature fluctuation occurs in the future, the industrial control system 106 can retrieve the stored sequence of actions that previously led to successful stabilization.

In one example, the stored sequences are used for training the optimizing algorithm. By continuously updating the digital database with successful sequences of optimized actions, the optimizing algorithm can learn from past experiences and improve its predictive capabilities. For example, the optimizing algorithm can analyze patterns in the stored data to identify the most effective actions for different types of anomalies. A continuous learning process enhances the accuracy and effectiveness of the optimizing algorithm, ensuring that future recommendations are increasingly reliable and data-driven.

The automation module 112 further causes the processing unit 202 to utilize the stored sequence to enhance future predictions and optimizations through continuous learning and adaptation of the machine learning algorithm. Future predictions and optimizations involve the algorithm analyzing historical data to forecast potential anomalies and recommend proactive measures to prevent them. For example, if the algorithm identifies a pattern of temperature fluctuations that typically precedes a kiln shutdown, it can predict such an event and suggest adjustments to the fuel feed rate and air flow to stabilize the temperature before the shutdown occurs. This proactive approach minimizes downtime and enhances overall efficiency of operations of the cement kiln.

Continuous learning and adaptation of the optimizing algorithm are achieved by constantly updating the optimizing algorithm with new data from the stored sequences. Each time a sequence of optimized actions successfully neutralizes an anomaly, the optimizing algorithm incorporates information to refine predictive models. For instance, if an adjustment to the air flow rate proved effective in stabilizing the cement kiln during a specific disturbance, the optimizing algorithm will learn to prioritize similar actions in future scenarios. Thus, such an iterative process ensures that the algorithm becomes more accurate and effective over time, continually improving the ability to manage operations of the cement kiln.

The automation module 112 further causes the processing unit 202 to provide an interactive user interface for operators to view the plurality of real-time process parameters, historical data, and recommendations of the sequence of optimized actions. The interactive user interface serves as a crucial tool for operators, enabling them to monitor the performance of the cement kiln and make informed decisions. Thus, the interactive user interface can be presented in various ways, such as a dashboard displaying key metrics like temperature, pressure, and fuel feed rate in real-time. Operators can see graphical representations of these parameters, allowing them to quickly identify trends and anomalies.

The interactive user interface also provides access to historical data, enabling operators to review past events and actions taken to resolve them. For example, an operator can look up a previous instance of a temperature spike and see the sequence of actions that successfully stabilized the cement kiln. The historical context helps operators understand the rationale behind specific recommendations and enhances their decision-making process.

Optimization recommendations are another critical feature of the interactive user interface. The automation module 112 is configured to display suggested actions based on real-time data and historical insights. For instance, if the algorithm detects a drop in temperature, the interface might recommend increasing the coal feed rate and adjusting the air flow. Operators can review these recommendations and decide whether to implement them manually or allow the system to do so automatically.

The advantages of utilizing the stored sequence to enhance future predictions and optimizations through continuous learning and adaptation of the machine learning algorithm include more accuracy and effectiveness in predictions of the sequence of optimized actions. The continuous learning process allows the optimizing algorithm to adapt to changing conditions, ensuring that the optimizing algorithm can handle a wide range of scenarios. The interactive user interface empowers operators by providing them with real-time data, historical context, and actionable recommendations, leading to more informed and effective decision-making.

The environmental advantages of deploying the sequence of optimized actions are significant. By maintaining stable kiln operations, the automation module 112 ensures that fuel is burned more efficiently, leading to reduced emissions of CO2 and other pollutants. For instance, by optimizing the air-fuel ratio and maintaining consistent temperatures, the cement kiln operates more cleanly, contributing to lower greenhouse gas emissions and a smaller environmental footprint. Additionally, the reduction in thermal cycling and operational disruptions minimizes the wear and tear on kiln components, thereby prolonging the lifespan of critical equipment and reducing waste from frequent replacements.

Furthermore, advantageously, minimizing downtime and maintaining stable operations, the cement plant can maximize production output, thereby increasing revenue. Additionally, efficient fuel usage and optimized resource management result in cost savings. For example, by avoiding overuse of expensive fuels and reducing energy waste, the cement plant can significantly lower its operational expenses. Moreover, reduction in maintenance costs due to less frequent replacements of kiln components further enhances the cement plant's profitability. Return on investment (ROI) is quickly realized as initial costs of implementing the optimizing algorithms and automated control systems are offset by the continuous operational savings and increased production efficiency.

Furthermore, deployment of advanced machine learning algorithms and real-time data analytics enhances the precision and responsiveness of kiln operations. By continuously learning from historical data and adapting to new patterns, the automation module 112 improves predictive capabilities, ensuring that the most effective corrective actions are taken promptly. This leads to a more consistent and reliable operation, reducing the reliance on operator expertise and minimizing human error. Furthermore, the integration of the automation module 112 into existing control systems allows for seamless implementation and real-time adjustments, ensuring that the cement kiln operates within optimal parameters at all times. The cloud-based infrastructure provides scalable computing resources, enabling the system to handle large datasets and complex calculations, further enhancing its effectiveness and efficiency.

The reduction in labor is a significant advantage of the present invention. By automating the monitoring and adjustment of kiln parameters, the need for constant manual intervention by operators is greatly diminished. This not only reduces the workload on staff but also minimizes the potential for human error. Operators are no longer required to continuously monitor the cement kiln's 102 performance and make adjustments based on their observations. Instead, they can rely on the automation module 112 and control systems to handle these tasks, allowing them to focus on higher-level decision-making and maintenance activities. This shift not only enhances operational efficiency but also reduces labor costs and the strain on human resources.

Quick responsiveness is another critical advantage offered by the system. The real-time data analysis and automated adjustments enable the system to detect and respond to anomalies almost instantaneously. For instance, if an unexpected drop in temperature is detected, the system can immediately adjust the fuel feed rate and air flow to stabilize the cement kiln's 102 temperature. This rapid response minimizes the duration of suboptimal operating conditions, preventing minor issues from escalating into major problems. The ability to quickly address disturbances ensures that the cement kiln operates smoothly, reducing downtime and maintaining consistent production rates. This quick responsiveness is particularly beneficial in maintaining the quality and efficiency of the cement production process.

The quality of the cement produced is significantly enhanced through the optimized control of kiln parameters. By maintaining consistent operating conditions, the system ensures that the clinker produced is of high and uniform quality. Fluctuations in temperature, pressure, and chemical composition can lead to variations in the clinker, affecting the final cement product's strength and durability. The automated system's precise control over these parameters results in a more consistent and reliable product. High-quality clinker translates to superior cement, which meets industry standards and customer expectations. This improvement in product quality can lead to increased customer satisfaction and a stronger market position for the cement plant.

Wear and tear of the cement kiln are substantially reduced through optimized operational control. Maintaining stable temperatures and operating conditions prevents the frequent thermal cycling that can damage kiln linings and other components. By reducing the occurrence of extreme conditions, the system minimizes the stress on the cement kiln's 102 materials, prolonging their lifespan and reducing the need for frequent maintenance and replacements. This not only lowers maintenance costs but also enhances the overall reliability and availability of the cement kiln. Reduced wear and tear mean that the cement kiln can operate for longer periods without interruption, contributing to higher productivity and lower operational costs.

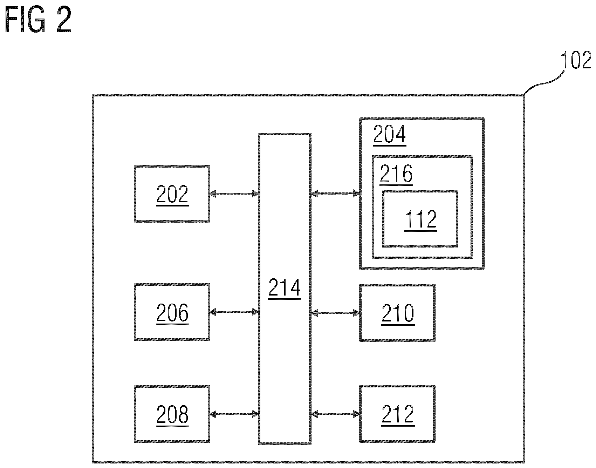

FIG 2 is a block diagram of an industrial control system 106, such as those shown in FIG 1, in which an embodiment of the present invention can be implemented. In FIG 2, the industrial control system 106 includes a processor(s) 202, an accessible memory 204, a storage unit 206, a communication interface 208, an input-output unit 210, a network interface 212 and a bus 214.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processor(s) 202.

The storage unit 206 may be a non-transitory storage medium configured for storing a database (such as database 118) which comprises server version of the plurality of programming blocks associated with the set of industrial domains.

The communication interface 208 is configured for establishing communication sessions between one or more client devices and the industrial control system 106. The communication interface 208 allows one or more control applications running on the HMI 108 to import/export project files into the industrial control system 106. In an embodiment, the communication interface 208 interacts with the interface at the HMI 108 for allowing one or more plant operators to control the cement manufacturing kiln 102.

The input-output unit 210 may include input devices a keypad, touch-sensitive display, camera (such as a camera receiving gesture-based inputs), etc. capable of receiving one or more input signals, such as user commands to control the plurality of operational parameters. Also, the input-output unit 210 may be a display unit for displaying a graphical user interface which visualizes the plurality of operational parameters. The bus 214 acts as interconnect between the processor 202, the memory 204, and the input-output unit 210.

The network interface 212 may be configured to handle network connectivity, bandwidth and network traffic between the industrial control system 106, the HMI 108, the one or more sensors 104 and the cement manufacturing kiln 102.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an control system 106 as is unique to the present disclosure or necessary for an understanding of the present disclosure is depicted and described. The remainder of the construction and operation of the industrial control system 106 may conform to any of the various current implementation and practices known in the art.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of the industrial control system 102 as is unique to the present disclosure or necessary for an understanding of the present disclosure is depicted and described. The remainder of the construction and operation of the industrial control system 102 may conform to any of the various current implementation and practices known in the art.

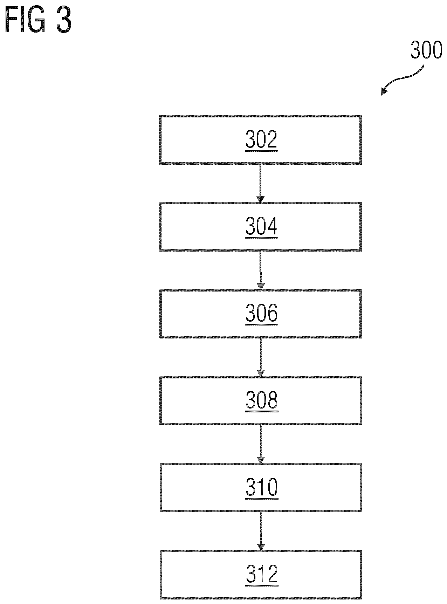

FIG 3 is a process flowchart illustrating an exemplary method 300 of automatically optimizing process parameters in a cement kiln, according to an embodiment of the present invention. Fig. 3 is explained in conjunction with FIG. 1 and 2.

At step 302, the occurrence of an anomalous event in the cement kiln 102 is determined by analyzing a plurality of real-time process parameters captured by one or more sensors 104 associated with the cement kiln 102.

At step 304, at least one signature process pattern associated with at least one historical event in the cement kiln 102 is determined. The at least one signature process pattern comprises a sequence of parameter changes that occurred in a first time period before the occurrence of the historical event in the cement kiln 102. Furthermore, the historical event is similar to the anomalous event under consideration.

At step 306, a sequence of optimized actions is generated based on the determined at least one signature process pattern. The sequence of optimized actions is designed to neutralize the anomalous event. The generation process involves the application of an optimizing algorithm on at least one historic user action, which was performed in response to the occurrence of the historical event in the past.

At step 306, a sequence of optimized actions is generated based on the determined at least one signature process pattern. The sequence of optimized actions is designed to neutralize the anomalous event. Neutralizing the anomalous event involves restoring the cement kiln to its optimal operating conditions by addressing the specific deviations that caused the disturbance. The automation module neutralizes the anomalous event by analyzing real-time data to identify the exact nature of the anomaly, and then implementing a series of corrective measures that counteract the deviations.

The sequence of optimized actions neutralizes the anomalous event by making precise adjustments to control parameters such as fuel feed rate, kiln rotation speed, and air flow rates. For example, if the anomalous event involves a sudden drop in calciner temperature, the sequence of optimized actions might include increasing the coal feed rate and adjusting the air flow to provide additional heat and stabilize the temperature. By systematically addressing the root cause of the anomaly, the sequence of optimized actions ensures that the cement kiln returns to stable and efficient operation.

The automation module is able to precisely generate the sequence of optimized actions that can neutralize the anomalous event by leveraging historical data and advanced machine learning algorithms. The automation module first identifies at least one signature process pattern associated with similar historical events, which provides a proven sequence of parameter changes that successfully addressed the disturbance in the past. The automation module then applies the optimizing algorithm, such as a genetic algorithm or reinforcement learning algorithm, to analyze the effectiveness of the plurality of past user actions and generate the most appropriate sequence of optimized actions for the current situation.

For example, if the historical data indicates that a combination of increasing the coal feed rate by 5% and reducing the air flow by 3% led to the stabilization of kiln temperature in a similar past event, the automation module will generate a sequence of optimized actions that includes these specific adjustments. By continuously learning from historical data and adapting to new patterns, the automation module ensures that the generated sequence of optimized actions is tailored to the specific conditions of the cement kiln and is highly likely to neutralize the anomalous event effectively.

At step 308, the generated sequence of optimized user actions is deployed on the cement kiln 102. This deployment aims to neutralize the anomalous event and optimize the plurality of process parameters in the cement kiln 102.

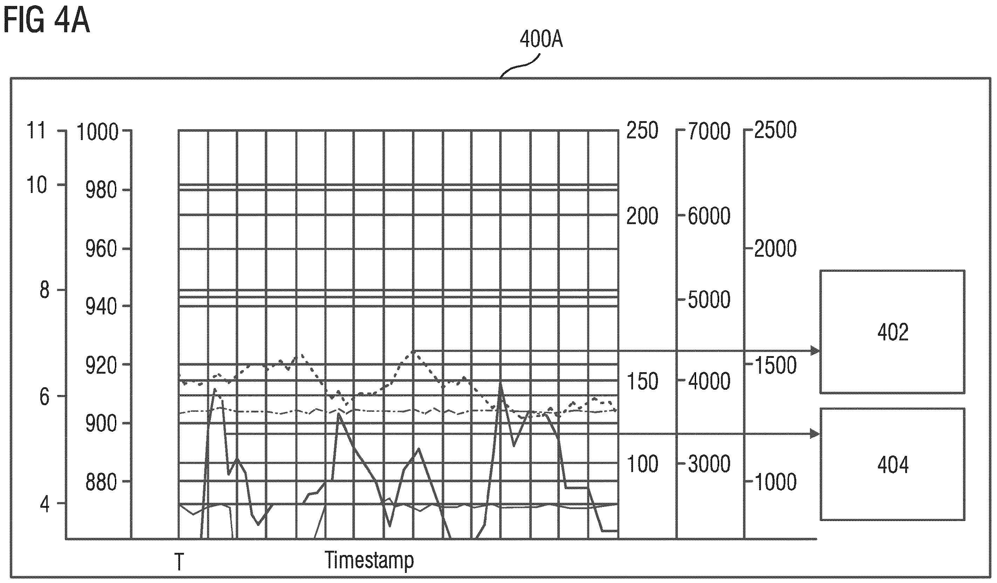

FIG 4A-E is a graphical representation of an implementation of an embodiment of the present invention in an industrial control system.

In FIG. 4A, a first user interface 400A is shown. The first user interface 400A displays two curves: a first curve for sintering temperature and a second curve for calciner temperature. A first point 402 indicates a first anomalous event where the sintering temperature is high, and a second point 404 indicates a second anomalous event where the calciner temperature is high. These anomalies are detected by the automation module 112, which continuously monitors these critical process parameters using the one or more sensors 104.

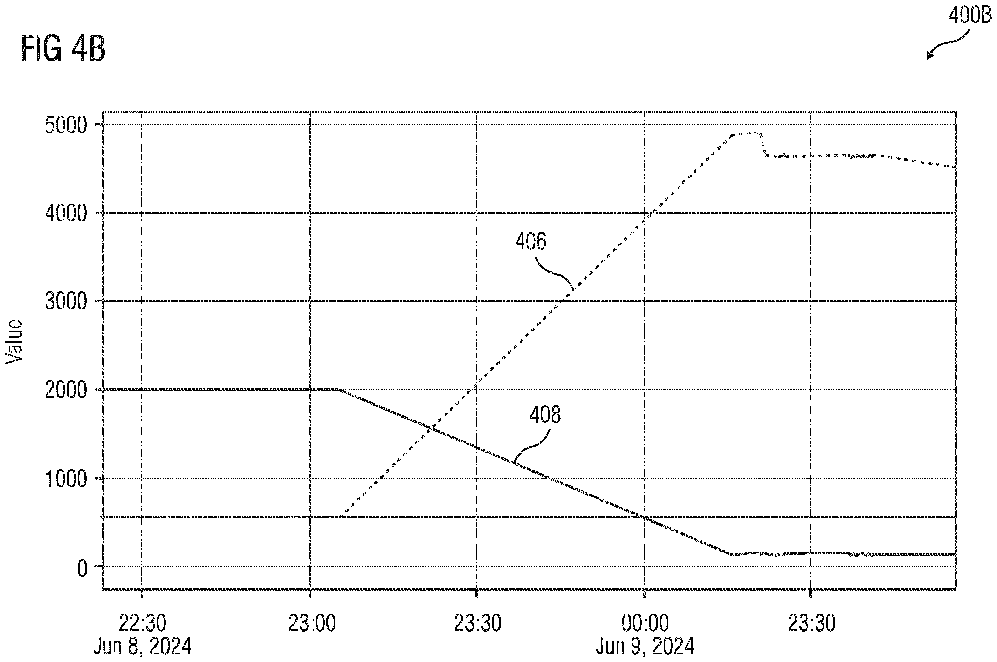

Referring to FIG. 4B, a second user interface 400B is displayed. The second user interface 400B shows responses to the anomalies identified in FIG. 4A. A first curve 406 depicts the use of fuel in a coal burner following the first point 402, and a second curve 408 depicts the use of fuel in an RDF (Refuse-Derived Fuel) burner as a result of the same anomaly. These curves illustrate how the industrial control system 106 adjusts fuel inputs in response to detected disturbances.

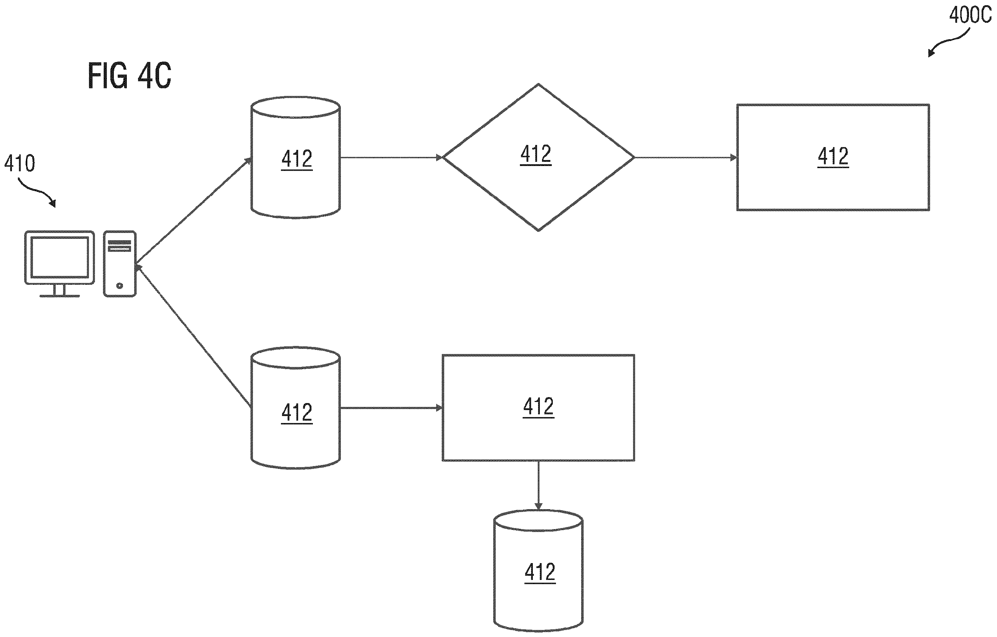

In FIG. 4C, a first process diagram 400C of the working of the present invention is shown. The control system 410, which includes the automation module 112, provides a set of real-time process parameters 412 and a set of past process parameters 414. At step 416, the automation module 112 determines whether there is a change in control parameters. If no change is determined, the automation module 112 continues monitoring (step 420). If a change is detected, the set of real-time process parameters 412 is compared (step 418) with the set of past process parameters 414 to generate a optimal sequence of user actions based on historical data stored in a first digital database 422.

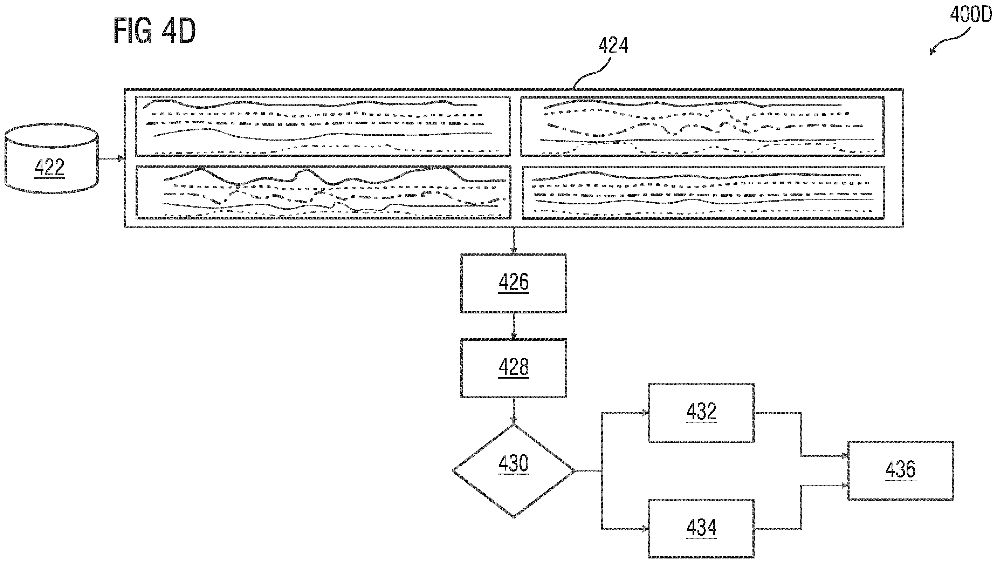

Referring to FIG. 4D, a second process diagram 400D is illustrated. The optimal sequence of user actions generated in the first digital database 422 is stored in a cloud 424. The set of process parameters in a time period T-30 is determined and compared with current values (step 426) and stored in an intermediate database 428. Both stable (432) and unstable 434 chains of reactions are identified (step 430) and stored in a final database 436. This allows the automation module 112 to learn from past disturbances and operator actions, enhancing the predictive accuracy and effectiveness of the automation module 112.

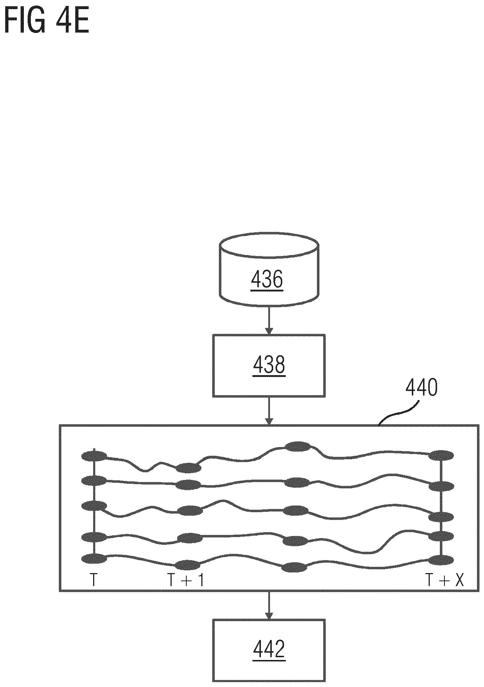

In FIG. 4E, the automation module 112 utilizes similarity patterns in the final database 436 to identify optimal operator actions for similar disturbances in the time period T+30, at step 437. At step 438, different chain reactions are evaluated until the most optimal chain reaction is identified. This iterative process ensures that the cement kiln 102 is brought to a stable state as quickly as possible, as shown in step 440.

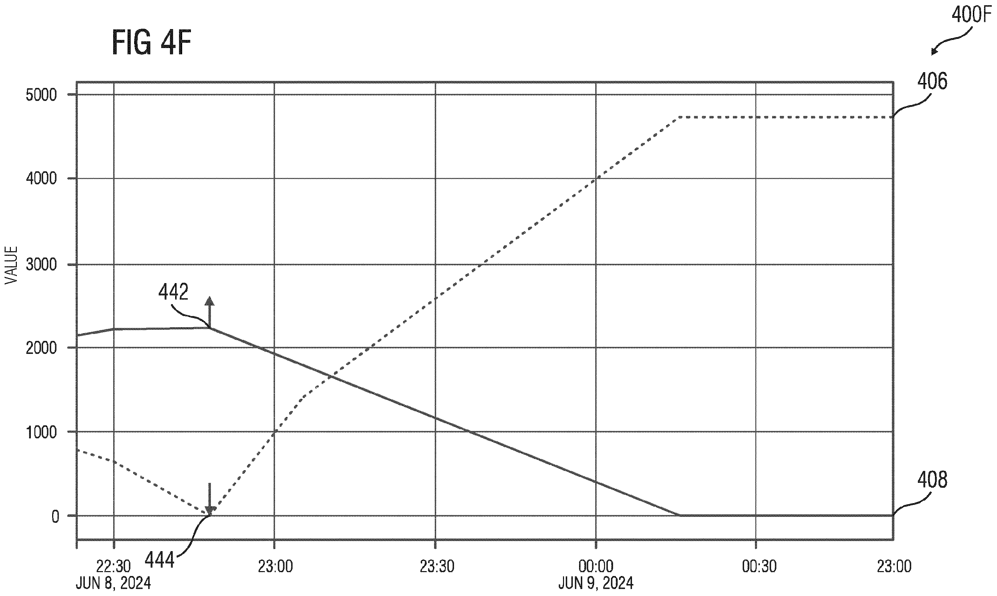

Referring to FIG. 4F, the effects of fuel adjustments are shown. At a third point 444, the coal burner increases fuel consumption much faster than earlier, while at a fourth point 442, the RDF burner reduces fuel consumption faster than before. These adjustments are made automatically by the industrial control system 106 based on the optimized actions recommended by the automation module 112.

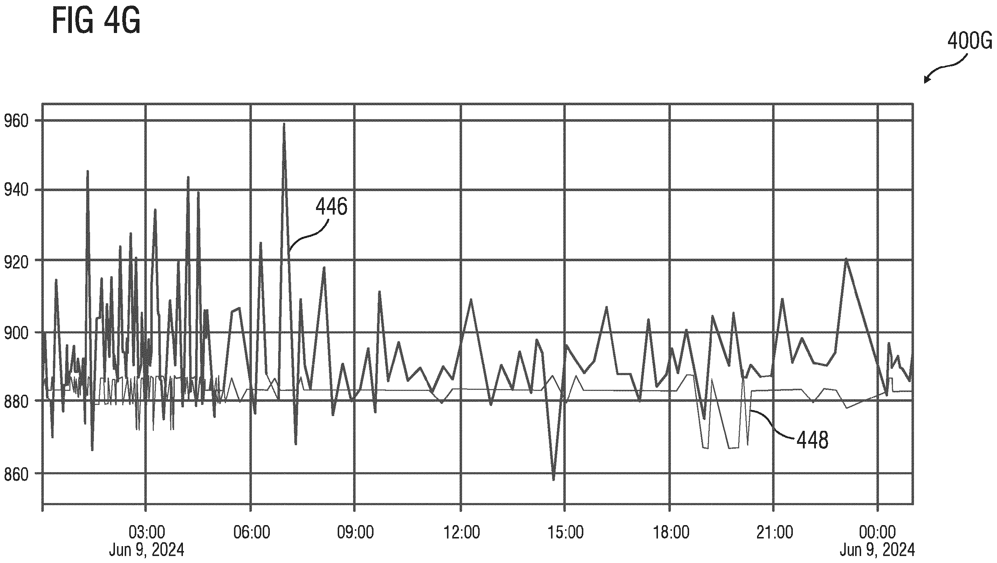

Finally, FIG. 4G illustrates the effectiveness of the present invention in stabilizing kiln operations. A first curve 446 shows the condition of calciner temperature without the present invention, where the calciner temperature varies significantly. A second curve 448 shows the condition of calciner temperature after implementing the present invention, where the temperature remains very stable. This stability is achieved through the automated, data-driven adjustments made by the control system 410, reducing the need for manual intervention and minimizing the risk of prolonged instability.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference list

- **100:** System for automatically optimizing process parameters in a cement kiln
- **102:** Cement kiln
- **104:** One or more sensors
- **106:** Industrial control system
- **108:** Human-machine interface (HMI)
- **112:** Automation module
- **202:** Processing unit
- **204:** Memory
- **206:** Storage unit
- **208:** Communication interface
- **210:** Input-output unit
- **212:** Network interface
- **214:** Bus
- **216:** Integrated development environment (IDE)
- **300:** Method for automatically optimizing process parameters in a cement kiln
- **302:** Step of determining an occurrence of an anomalous event
- **304:** Step of determining at least one signature process pattern
- **306:** Step of generating a sequence of optimized actions
- **308:** Step of deploying the sequence of optimized actions
- **400A:** First user interface
- **400B:** Second user interface
- **400C:** First process diagram
- **400D:** Second process diagram
- **400E:** Graphical representation of fuel adjustments
- **402:** First point indicating a first anomalous event
- **404:** Second point indicating a second anomalous event
- **406:** First curve depicting fuel use in coal burner
- **408:** Second curve depicting fuel use in RDF burner
- **410:** Control system
- **412:** Set of real-time process parameters
- **414:** Set of past process parameters
- **416:** Step of determining whether there is a change in control parameters
- **418:** Step of comparing real-time process parameters with past process parameters
- **420:** Step of continuing monitoring
- **422:** First digital database
- **424:** Cloud
- **426:** Step of determining and comparing process parameters in a time period T-30
- **428:** Intermediate database
- **430:** Step of identifying stable and unstable chains of reactions
- **432:** Stable chains of reactions
- **434:** Unstable chains of reactions
- **436:** Final database
- **437:** Step of identifying optimal operator actions for similar disturbances in the time period T+30
- **438:** Step of evaluating different chain reactions
- **440:** Step of bringing the cement kiln to a stable state
- **442:** Fourth point indicating reduction in fuel consumption in RDF burner
- **444:** Third point indicating increase in fuel consumption in coal burner
- **446:** First curve showing calciner temperature without the present invention
- **448:** Second curve showing calciner temperature with the present invention

## Claims

1. A method of optimizing real-time process parameters in a cement kiln (102), the method comprising:
determining an occurrence of an anomalous event in the cement kiln by analysis of a plurality of real-time process parameters in the cement kiln (102), wherein the plurality of real-time process parameters are captured by one or more sensors (104) associated with the cement kiln (102);
determining at least one signature process pattern associated with at least one historical event in the cement kiln (102), wherein the determined at least one signature process pattern comprises a sequence of parameter changes which has occurred in a first time period prior to an occurrence of the at least one historical event in a past time period, and the at least one historical event is similar to the anomalous event;
generating, based on the determined at least one signature process pattern, a sequence of optimized actions which are configured to neutralize the anomalous event, wherein the sequence of optimized actions is generated by application of an optimizing algorithm on a set of parameter values associated with the at least one historical event; and
deploying the sequence of optimized user actions on the cement kiln (102) to neutralize the anomalous event and thereby optimizing the plurality of real-time process parameters in the cement kiln (102).

2. The method of claim 1, wherein determining the at least one signature process pattern comprises:
analyzing historical data to determine a plurality of historical events which has occurred in the first time period and a plurality of signature process patterns associated with the plurality of historical events, wherein
the plurality of signature process patterns comprises a sequence of parameter changes which has occurred prior to the occurrence of each historical event in the plurality of historical events, and
the historical data comprises a plurality of past process parameters and a plurality of control parameters.

3. The method of any one of claims 1 and 2, wherein determining the at least one signature process pattern further comprises:
comparing one or more patterns in the plurality of real-time process parameters to each signature process pattern of the plurality of signature process patterns; and
selecting the at least one signature process pattern based on the comparison, wherein the selected at least one signature process pattern is similar to the one or more patterns in the plurality of real-time process parameters.

4. The method of any one of claims 2 to 3, wherein generating the sequence of optimized actions comprises:
correlating each parameter change in the sequence of parameter changes in the at least one signature process pattern to a plurality of sequences of user actions performed by the user in response to the at least one historical event; and
applying the optimizing algorithm on the plurality of sequences of user actions and on the set of parameter values to generate the sequence of optimized actions, wherein the set of process parameters is received from the one or more sensors in a second time period, and the second time period has occurred subsequent to occurrence of the at least one historical event.

5. The method of any one of claims 1 to 4, wherein the optimizing algorithm is configured to:
determine a stability parameter of the set of parameter values in the second time period, subsequent to the implementation of each sequence of the plurality of sequences of user actions; and
select an optimal sequence of historical user actions from the plurality of sequences of user actions, wherein the optimal sequence of historical user actions is selected based on the stability parameter associated with the set of parameter values, and wherein the sequence of optimized actions are generated based on the selected optimal sequence of user actions.

6. The method of any one of claims 1 to 5, wherein deploying the sequence of optimized user actions further comprises:
automatically adjusting a plurality of control parameters in the cement kiln based on the generated sequence of optimized user actions; and
providing real-time feedback to a user and a plurality of effects of the deployment of the sequence of optimized user actions.

7. The method of any one of claims 1 to 6, further comprising determining an optimizing parameter associated with the plurality of real-time process parameters received during a third time period, wherein the third time period occurs subsequent to the identified anomalous event.

8. The method of claim 7, further comprising:
storing the sequence of optimized user actions and a plurality of resulting process parameters in a digital database, based on the determined optimizing parameter; and
utilizing the stored sequence to enhance future predictions and optimizations through continuous learning and adaptation of the optimizing algorithm.

9. The method of any one of claims 1 to 8, further comprising providing an interactive user interface for operators to view the plurality of real-time process parameters, historical data, and optimization recommendations, thereby enabling one or more operators to manually input a set of user actions to stabilize the cement kiln.

10. A system for optimizing real-time process parameters in a cement kiln (102), the system comprising:
∘ one or more sensors (104) configured to monitor and collect data on a plurality of real-time process parameters in the cement kiln (102);
∘ a processing unit (202) configured to:
▪ determine an occurrence of an anomalous event in the cement kiln (102) by analyzing the plurality of real-time process parameters captured by the one or more sensors (104);
▪ determine at least one signature process pattern associated with at least one historical event in the cement kiln (102), wherein the determined at least one signature process pattern comprises a sequence of parameter changes which has occurred in a first time period prior to an occurrence of the at least one historical event in a past time period, and the at least one historical event is similar to the anomalous event;
▪ generate, based on the determined at least one signature process pattern, a sequence of optimized actions which are configured to neutralize the anomalous event, wherein the sequence of optimized actions is generated by application of an optimizing algorithm on a set of parameter values associated with the at least one historical event; and
▪ deploy the sequence of optimized actions on the cement kiln (102) to neutralize the anomalous event and thereby optimize the plurality of real-time process parameters in the cement kiln (102).

11. The system of claim 1, wherein the processing unit (202) is further configured to:
∘ analyze historical data to determine a plurality of historical events which have occurred in the first time period and a plurality of signature process patterns associated with the plurality of historical events, wherein the plurality of signature process patterns comprises a sequence of parameter changes which has occurred prior to the occurrence of each historical event in the plurality of historical events, and the historical data comprises a plurality of past process parameters and a plurality of control parameters.

12. The system of any one of claims 1 and 2, wherein the processing unit (202) is further configured to:
compare one or more patterns in the plurality of real-time process parameters to each signature process pattern of the plurality of signature process patterns; and select the at least one signature process pattern based on the comparison,
wherein the selected at least one signature process pattern is similar to the one or more patterns in the plurality of real-time process parameters.

13. The system of claim 12, wherein the optimizing algorithm is configured to determine a stability parameter of the set of parameter values in the second time period, subsequent to the implementation of each sequence of the plurality of sequences of historical user actions, and to select an optimal sequence of historical user actions from the plurality of sequences of past user actions based on the stability parameter, wherein the sequence of optimized actions is generated based on the selected optimal sequence of historical user actions.

14. A non-transitory computer-readable medium having program instructions stored thereon, the program instructions, when executed by a processor, cause the processor to perform a method according to any of claims 1 to 9.
